(19)

**Europäisches Patentamt**

**European Patent Office**

**Office européen des brevets**

(11) **EP 4 046 347 B1**

(12) **FASCICULE DE BREVET EUROPEEN**

(45) Date de publication et mention de la délivrance du brevet:
**13.12.2023 Bulletin 2023/50**

(21) Numéro de dépôt: **20793759.0**

(22) Date de dépôt: **07.10.2020**

(51) Classification Internationale des Brevets (IPC):
**H04L 27/00** (2006.01)      **H04B 5/00** (2006.01)
**H04B 7/0413** (2017.01)      **H04W 4/70** (2018.01)
**H01Q 3/00** (2006.01)

(52) Classification Coopérative des Brevets (CPC):
**H04L 27/0012; H04B 7/0413; H04W 4/70**

(86) Numéro de dépôt international:
**PCT/FR2020/051763**

(87) Numéro de publication internationale:
**WO 2021/074504 (22.04.2021 Gazette 2021/16)**

(54) **PROCÉDÉ DE SÉLECTION POUR OPTIMISER DES COMMUNICATIONS PAR RÉTRODIFFUSION AMBIANTE, ET SYSTÈME ASSOCIÉ**

AUSWAHLVERFAHREN ZUR OPTIMIERUNG DER KOMMUNIKATION DURCH UMGEBUNGSRÜCKSTREUUNG UND ZUGEHÖRIGES SYSTEM

SELECTION METHOD FOR OPTIMISING COMMUNICATIONS BY AMBIENT BACKSCATTERING, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2019 FR 1911552**

(43) Date de publication de la demande:
**24.08.2022 Bulletin 2022/34**

(73) Titulaire: **Orange**
**92130 Issy-les-Moulineaux (FR)**

(72) Inventeurs:
• **PHAN HUY, Dinh thuy**
**92326 Châtillon Cedex (FR)**
• **FARA, Romain**
**92326 Châtillon Cedex (FR)**

(74) Mandataire: **Cabinet Beau de Loménie**
**158, rue de l'Université**
**75340 Paris Cedex 07 (FR)**

(56) Documents cités:
**EP-A1- 3 349 302**

• **GUO HUAYAN ET AL: "Exploiting Multiple Antennas for Cognitive Ambient Backscatter Communication", IEEE INTERNET OF THINGS JOURNAL, IEEE, USA, vol. 6, no. 1, 1 février 2019 (2019-02-01) , pages 765-775, XP011711636, DOI: 10.1109/JIOT.2018.2856633**
• **VAN HUYNH NGUYEN ET AL: "Ambient Backscatter Communications: A Contemporary Survey", IEEE COMMUNICATIONS SURVEYS & TUTORIALS, vol. 20, no. 4, 1 février 2019 (2019-02-01), - 1 février 2019 (2019-02-01), pages 2889-2922, XP011698260, DOI: 10.1109/COMST.2018.2841964 cité dans la demande**

**Description**

Technique antérieure

La présente invention appartient au domaine général des télécommunications. Elle concerne plus particulièrement un procédé de sélection mis en oeuvre par un système de communication par rétrodiffusion ambiante, ladite sélection se rapportant à une ou plusieurs valeurs représentatives d'une puissance électromagnétique utile au fonctionnement d'un dispositif récepteur appartenant audit système. Elle concerne également un procédé de communication mis en oeuvre par ledit système. L'invention trouve une application particulièrement avantageuse, bien que nullement limitative, pour des applications du type « Internet des objets » (« Internet of Things » ou IoT dans la littérature anglo-saxonne).

La technologie de rétrodiffusion ambiante est aujourd'hui bien connue. Les principes techniques sur lesquels s'appuie cette technologie sont décrits, notamment, dans le document de N. Van Huynh et al. intitulé « Ambient Backscatter Communications: A Contemporary Survey », in IEEE Communications Surveys & Tutorials, vol. 20, no. 4, pp. 2889-2922, Fourthquarter 2018. La demande EP 3349302 A1 concerne un procédé de transfert d'informations entre un dispositif de communication d'émission et un dispositif de communication de réception par communication à rétrodiffusion ambiante.

De manière conventionnelle, la rétrodiffusion d'un signal ambiant s'effectue entre au moins un dispositif transmetteur et au moins un dispositif récepteur occupant des positions respectives fixes.

Le signal ambiant concerné correspond à un signal radio émis, de manière permanente ou bien de manière récurrente, par au moins une source dans une bande fréquentielle donnée. Par exemple, il peut s'agir d'un signal de télévision, d'un signal de téléphonie mobile (3G, 4G, 5G), d'un signal Wi-Fi, d'un signal WiMax, etc.

Pour communiquer avec un dispositif récepteur, un dispositif transmetteur exploite le signal ambiant pour envoyer des données vers ledit dispositif récepteur. Plus particulièrement, le dispositif transmetteur réfléchit le signal ambiant vers le dispositif récepteur, éventuellement en le modulant. Le signal ainsi réfléchi est dit « signal rétrodiffusé », et est destiné à être décodé par le dispositif récepteur.

Le fait qu'aucune onde radio supplémentaire (au sens d'une onde autre que celle résultant du signal ambiant) n'est émise par le dispositif transmetteur rend la technologie de rétrodiffusion ambiante particulièrement attractive. En effet, le coût énergétique d'une communication est ainsi optimisé, ce qui est notamment d'importance dans le contexte actuel de l'IoT où chaque objet de la vie courante a vocation à devenir un objet communicant.

Pour mettre en oeuvre cette technologie, le dispositif transmetteur est configuré pour recevoir le signal ambiant, mais aussi le rétrodiffuser (état dit de « rétrodiffusion ») ou non (état dit de « non-rétrodiffusion ») vers le dispositif récepteur. Le dispositif récepteur, quant à lui, est configuré pour décoder le signal éventuellement rétrodiffusé par le dispositif transmetteur.

Cela étant, et en pratique, ce décodage ne peut être mis en oeuvre que si la variation de puissance électromagnétique reçue par le dispositif récepteur, entre des instants où le dispositif transmetteur est dans les états respectivement de non-rétrodiffusion et de rétrodiffusion, dépasse un seuil déterminé, dit « seuil de puissance ». En effet, si ce seuil de puissance n'est pas atteint, le dispositif récepteur n'est pas en mesure de détecter que le dispositif transmetteur est dans un état de rétrodiffusion, et donc ne met en oeuvre aucun décodage (essentiellement pour des raisons de préservation de son autonomie énergétique).

L'existence d'un tel seuil de puissance, en complément du fait que les dispositifs transmetteur et récepteur occupent des positions fixes, se révèle être toutefois problématique pour garantir une communication efficace entre lesdits dispositifs.

En effet, les dispositifs transmetteur et récepteur sont généralement positionnés dans un environnement de propagation complexe comprenant des éléments (murs, arbres, sol, etc.) susceptibles de générer des réflexions et des diffractions d'ondes émises par la source. Ainsi, et de manière schématique, deux types de signaux parviennent au dispositif récepteur : le signal rétrodiffusé, seul porteur des données utiles à la mise en oeuvre de la rétrodiffusion ambiante, ainsi qu'un signal provenant directement de la source dit « signal interférent » et résultant de multiples réflexions / diffractions d'ondes (par « directement », on fait référence ici à des ondes non issues du signal rétrodiffusé).

Dans la mesure où le signal interférent ne véhicule pas de données utiles à la mise en oeuvre de la rétrodiffusion ambiante (seules les données véhiculées par le signal rétrodiffusé sont destinées à être décodées), il est dès lors perçu comme une « pollution » du côté du dispositif récepteur. Cette considération à l'égard du signal interférent est en outre renforcée par le fait que celui-ci peut se combiner de manière non maitrisée avec le signal rétrodiffusé, altérant ainsi éventuellement le niveau de puissance électromagnétique pouvant être reçu, en théorie et sur la seule base du signal rétrodiffusé, par le dispositif récepteur.

En conséquence, ledit dispositif récepteur est classiquement configuré pour réaliser des traitements visant à annuler, à la réception, toute contribution du signal interférent au signal total reçu (i.e. la somme du signal rétrodiffusé et du signal interférent). Une telle configuration du dispositif récepteur est néanmoins problématique dans la mesure où elle est complexe à mettre en oeuvre (électronique ainsi que traitements algorithmiques dédiés), et donc nécessairement onéreuse à déployer. En outre, elle ne permet pas de tirer parti, au niveau du dispositif récepteur, de la puissance électromagnétique véhiculée par les ondes du signal interférent. L'atteinte dudit seuil de puissance peut donc être compromise, s'opposant ainsi à une communication efficace entre les dispositifs transmetteur et récepteur.

Exposé de l'invention

La présente invention a pour objectif de remédier à certains des inconvénients de l'art antérieur, notamment ceux exposés ci-avant, en proposant une solution qui permette de limiter, côté dispositif récepteur et par rapport aux solutions de l'art antérieur, la complexité de mise en oeuvre d'une communication par rétrodiffusion ambiante.

En outre, la présente invention a également pour objectif de proposer une solution qui permette de maximiser le niveau de puissance électromagnétique reçu par un dispositif récepteur, de sorte à faciliter l'atteinte dudit seuil de puissance, et ainsi améliorer le décodage des données transmises via un signal rétrodiffusé. La communication par rétrodiffusion ambiante entre un dispositif transmetteur et un dispositif récepteur est ainsi rendue plus efficace.

A cet effet, et selon un premier aspect, l'invention concerne un procédé de sélection mis en oeuvre par un système de communication par rétrodiffusion ambiante comportant une source émettrice ainsi qu'un dispositif transmetteur et un dispositif récepteur, la source étant associée à un précodeur de focalisation P comportant une première et une deuxième composantes pour focaliser des signaux vers respectivement le dispositif transmetteur et le dispositif récepteur. En outre, ledit procédé comporte, pour une valeur $\Phi\_i$ comprise dans l'intervalle $[0, 2\pi]$ :

- une étape de déphasage, par la source, d'une des composantes du précodeur P selon ladite valeur $\Phi\_i$, de sorte à obtenir un précodeur $Q\_i$,
- une étape d'émission, par la source, au moyen dudit précodeur $Q\_i$,
- une étape d'acquisition, par le dispositif récepteur, d'une première mesure et d'une deuxième mesure de puissance électromagnétique lorsque le dispositif transmetteur est respectivement dans un état de non-rétrodiffusion et dans un état de rétrodiffusion,
- une étape de détermination, par le dispositif récepteur, d'une valeur $D1\_i$ représentative d'un écart de puissance, en valeur absolue, entre lesdites première et deuxième mesures,

lesdites étapes de déphasage, d'émission, d'acquisition et de détermination étant itérées pour une pluralité de valeurs $\Phi\_1, ..., \Phi\_N$ distinctes entre elles, le procédé comportant en outre une étape de sélection, par le dispositif récepteur, d'une valeur, dite « valeur optimale intermédiaire », maximale parmi les valeurs $D1\_1, ..., D1\_N$ déterminées.

Corrélativement, l'invention concerne également un procédé d'émission mis en oeuvre par une source émettrice destinée à un système de communication par rétrodiffusion ambiante, ledit système comportant également un dispositif transmetteur et un dispositif récepteur, la source étant associée à un précodeur de focalisation P comportant une première et une deuxième composantes pour focaliser des signaux vers respectivement le dispositif transmetteur et le dispositif récepteur. Ledit procédé d'émission comporte, pour une valeur $\Phi\_i$ comprise dans l'intervalle $[0, 2\pi]$ :

- une étape de déphasage d'une des composantes du précodeur P selon ladite valeur $\Phi\_i$, de sorte à obtenir un précodeur $Q\_i$,
- une étape d'émission au moyen dudit précodeur $Q\_i$.

Dans un mode particulier de mise en oeuvre dudit procédé d'émission, lesdites étapes de déphasage et d'émission sont itérées pour une pluralité de valeurs $\Phi\_1, ..., \Phi\_N$ distinctes entre elles.

Corrélativement, l'invention concerne également un autre procédé de sélection mis en oeuvre par un dispositif récepteur destiné à un système de communication par rétrodiffusion ambiante, ledit système comportant également une source émettrice ainsi qu'un dispositif transmetteur, la source étant associée à un précodeur de focalisation P comportant une première et une deuxième composantes pour focaliser des signaux vers respectivement le dispositif transmetteur et le dispositif récepteur. Ledit autre procédé de sélection comporte :

- au cours d'une émission par la source au moyen d'un précodeur $Q\_i$ obtenu par ladite source par déphasage d'une des composantes du précodeur P selon une valeur $\Phi\_i$ comprise dans l'intervalle $[0, 2\pi]$, une étape d'acquisition d'une première mesure et d'une deuxième mesure de puissance électromagnétique lorsque le dispositif transmetteur est respectivement dans un état de non-rétrodiffusion et dans un état de rétrodiffusion,
- une étape de détermination d'une valeur $D1\_i$ représentative d'un écart de puissance, en valeur absolue, entre lesdites première et deuxième mesures,

lesdites étapes d'acquisition et de détermination étant itérées pour une pluralité de valeurs $\Phi\_1, ..., \Phi\_N$ distinctes entre

elles, ledit autre procédé de sélection comportant en outre une étape de sélection, par le dispositif récepteur, d'une valeur, dite « valeur optimale intermédiaire », maximale parmi les valeurs D1_1, ..., D1_N déterminées.

Ainsi, conformément audit procédé de sélection mis en oeuvre par le système de communication par rétrodiffusion ambiante (et donc aussi conformément audit procédé d'émission mis en oeuvre par la source et audit autre procédé de sélection mis en oeuvre par le dispositif récepteur), il est proposé de moduler la phase d'une des composantes du précodeur de focalisation P. Cela revient donc à moduler la phase du signal émis vers le dispositif récepteur et destiné à être rétrodiffusé, ou bien à moduler la phase du signal interférent qui n'est pas rétrodiffusé. En tout état de cause, le procédé de sélection selon l'invention permet donc de faire varier la différence de phase entre le signal rétrodiffusé et le signal interférent.

Faire varier ainsi ladite différence de phase entre les signaux rétrodiffusé et interférent, via la considération desdites valeurs $\Phi_i$, permet d'augmenter les combinaisons qui peuvent être envisagées entre ces signaux au niveau du dispositif récepteur. Autrement dit, et contrairement aux solutions de l'art antérieur, plutôt que de chercher à annuler toute contribution du signal interférent côté dispositif récepteur, le procédé de sélection selon l'invention permet de tirer parti de l'énergie véhiculée par ledit signal interférent en cherchant la valeur de déphasage aboutissant à une combinaison avantageuse de ce dernier avec le signal rétrodiffusé.

Par « combinaison avantageuse », on fait référence ici à une combinaison permettant de maximiser la variation de puissance électromagnétique reçue par le dispositif récepteur, entre des instants où le dispositif transmetteur est dans les états respectivement de non-rétrodiffusion et de rétrodiffusion. Maximiser cette variation de puissance permet de faciliter l'atteinte du seuil de puissance, de sorte à améliorer le décodage des données transmises par rétrodiffusion.

En outre, dans le cadre de la présente invention, la source émettrice est configurée pour exécuter des traitements visant à déphaser le précodeur de focalisation. Le dispositif récepteur, quant à lui, réalise également des traitements visant à acquérir au moins deux niveaux de puissance électromagnétique, via lesdites première et deuxième mesures de puissance, et à déterminer des écarts de puissance sur la base de ces mesures. De tels traitements sont beaucoup plus simples à mettre en oeuvre que ceux visant à annuler une contribution du signal interférent côté dispositif récepteur. Il s'agit de traitements nécessitant peu de calculs et pouvant être mis en oeuvre grâce à une électronique moins complexe que celle des solutions de l'art antérieur. On optimise donc ainsi, à moindre coût, l'efficacité de la communication par rétrodiffusion ambiante entre le dispositif transmetteur et le dispositif récepteur.

Dans des modes particuliers de mise en oeuvre, le procédé de sélection mis en oeuvre par le système de communication par rétrodiffusion ambiante (et donc également ledit procédé d'émission mis en oeuvre par la source et ledit autre procédé de sélection mis en oeuvre par le dispositif récepteur) peut comporter en outre l'une ou plusieurs des caractéristiques suivantes, prises isolément ou selon toutes les combinaisons techniquement possibles.

Dans des modes particuliers de mise en oeuvre, lesdites étapes de déphasage, d'émission, d'acquisition et de détermination sont itérées tant que la valeur D1_i déterminée au cours d'une étape de détermination pour une valeur $\Phi_i$ est inférieure à un seuil prédéterminé.

Procéder de la sorte permet de limiter le nombre d'itérations, et donc a fortiori de limiter le temps consacré à effectuer lesdites itérations. Les ressources de calcul du dispositif récepteur ainsi que de la source sont donc préservées.

Dans des modes particuliers de mise en oeuvre, lesdites étapes de déphasage, d'émission, d'acquisition et de détermination sont itérées un nombre déterminé de fois.

Procéder de la sorte offre la possibilité d'obtenir de façon certaine autant de valeur D1_i que le nombre d'itérations effectuées. Aussi, plus le nombre d'itérations est grand, plus la valeur maximale parmi les valeurs D1_1, ..., D1_N déterminées est grande, et donc plus la probabilité qu'au moins une desdites valeurs soit associée à un écart supérieur au seuil de puissance nécessaire au décodage de données rétrodiffusées est grande.

Dans des modes particuliers de mise en oeuvre, les valeurs $\Phi_1$, ..., $\Phi_N$ sont échantillonnées suivant une échelle logarithmique ou bien suivant une échelle linéaire.

Dans des modes particuliers de mise en oeuvre, le précodeur P est de type forçage à zéro ou bien de type minimisation d'une erreur quadratique moyenne.

Dans des modes particuliers de mise en oeuvre, ledit procédé comporte en outre, avant la mise en oeuvre des étapes de déphasage, d'émission, d'acquisition et de détermination, au moins une étape de mise à jour, par la source, du précodeur P, le précodeur P mis à jour correspondant au précodeur P dont les première et deuxième composantes sont pondérées par respectivement un premier coefficient et un deuxième coefficient strictement positifs formant un couple de coefficients, et l'étape de déphasage étant appliquée audit précodeur P mis à jour.

De telles dispositions permettent de modifier la répartition de puissance électromagnétique transmise par la source vers chacun des dispositifs transmetteur et récepteur, par exemple sur la base d'informations externes concernant l'environnement de propagation du système de communication. De cette manière, il est possible de tenir compte des conditions de propagation entre la source est les dispositifs transmetteur et récepteur, et donc d'améliorer la pertinence d'une valeur optimale intermédiaire obtenue selon l'invention.

Dans des modes particuliers de mise en oeuvre, une pluralité d'étapes de mise à jour est considérée, les couples de premier et deuxième coefficients considérés au cours desdites étapes de mise à jour étant distincts entre eux, l'ensemble d'étapes formé :

- des itérations des étapes de déphasage, d'émission, d'acquisition et de détermination pour les valeurs Φ_1, ..., Φ_N, et
- de l'étape de sélection d'une valeur optimale intermédiaire,

étant itéré pour chacune des étapes de mise à jour considérée, de sorte qu'à chaque étape de mise à jour correspond une valeur optimale intermédiaire,
ledit procédé comportant en outre une étape de sélection, par le dispositif récepteur, d'une valeur, dite « valeur optimale finale », maximale parmi lesdites valeurs optimales intermédiaires.

Procéder de la sorte permet de rechercher une répartition de puissance, entre les première et deuxième composantes du précodeur P, qui maximise la variation de puissance électromagnétique reçue par le dispositif récepteur, entre des instants où le dispositif transmetteur est dans les états respectivement de non-rétrodiffusion et de rétrodiffusion. Une telle mise en oeuvre, dite « premier mode optimal », est encore plus avantageuse en ce qu'elle comprend donc deux degrés d'optimisation d'une telle variation, à savoir une optimisation suivant des valeurs de déphasage ainsi qu'une optimisation suivant ladite répartition de puissance.

Dans des modes particuliers de mise en oeuvre, pour une étape de mise à jour donnée, le premier coefficient est égal à une valeur $\delta$, où $\delta$ est choisi dans l'intervalle $]0,1[$, et le deuxième coefficient est égal à $\sqrt{1 - \delta^2}$.

Dans des modes particuliers de mise en oeuvre, ledit procédé comporte, après l'étape de sélection de ladite valeur optimale intermédiaire, une étape de transmission, par le dispositif récepteur et vers la source, d'une information identifiant le précodeur, dit « précodeur optimal intermédiaire » Q, sur la base duquel a été déterminée ladite valeur optimale intermédiaire, ledit procédé comportant en outre, pour un couple C_m de premier et deuxième coefficients strictement positifs :

- une étape de mise à jour, par la source, du précodeur Q, le précodeur Q mis à jour correspondant au précodeur Q dont les première et deuxième composantes sont pondérées par respectivement lesdits premier et deuxième coefficients,
- une étape d'émission, par la source, au moyen dudit précodeur Q mis à jour,
- une étape d'acquisition, par le dispositif récepteur, d'une première mesure et d'une deuxième mesure de puissance électromagnétique lorsque le dispositif transmetteur est respectivement dans un état de non-rétrodiffusion et dans un état de rétrodiffusion,
- une étape de détermination, par le dispositif récepteur, d'une valeur D2_m représentative d'un écart de puissance, en valeur absolue, entre lesdites mesures,

lesdites étapes de mise à jour, d'émission, d'acquisition et de détermination considérées pour un couple de coefficients étant itérées pour une pluralité de couples C_1, ..., C_M de coefficients distincts entre eux, le procédé comportant en outre une étape de sélection, par le dispositif récepteur, d'une valeur, dite « valeur optimale finale », maximale parmi les valeurs D2_1, ..., D2_M déterminées.

Une telle mise en oeuvre, dite « deuxième mode optimal », forme une alternative audit premier mode optimal mentionné ci-avant, et hérite des mêmes avantages que ceux attachés à ce dernier.

Selon un deuxième aspect, l'invention concerne un procédé de de communication mis en oeuvre par un système de communication par rétrodiffusion ambiante comportant au moins une source émettrice ainsi qu'un dispositif transmetteur et un dispositif récepteur, la source étant associée à un précodeur de focalisation P comportant une première et une deuxième composantes pour focaliser des signaux vers respectivement le dispositif transmetteur et le dispositif récepteur. En outre, ledit procédé de communication comporte :

- une étape d'obtention d'une valeur optimale intermédiaire ou d'une valeur optimale finale sélectionnée selon un procédé de sélection conforme à l'invention,
- une étape de transmission, par le dispositif récepteur et vers la source, d'une information identifiant le précodeur, dit « précodeur optimisé », sur la base duquel a été déterminée ladite valeur optimale intermédiaire / valeur optimale finale,
- une étape d'émission, par la source, d'un signal ambiant au moyen dudit précodeur optimisé,
- une étape de rétrodiffusion, par le dispositif transmetteur, dudit signal ambiant,
- une étape de réception, par le dispositif récepteur, du signal ambiant rétrodiffusé.

Un tel procédé de communication hérite des mêmes avantages que ceux attachés au procédé de sélection selon l'invention.

Ainsi, une fois qu'un précodeur optimisé a été identifié, la source émet au moyen dudit précodeur optimisé. Dès lors, l'efficacité de la communication établie entre les dispositifs transmetteur et récepteur est grandement améliorée, étant donné que la probabilité que le seuil de puissance soit a minima atteint est beaucoup plus grande que dans le cas des solutions de l'art antérieur.

Dans des modes particuliers de mise en oeuvre, les étapes d'obtention, de transmission, d'émission, de rétrodiffusion et de réception sont itérées de manière récurrente.

De telles dispositions permettent de prendre en compte la variabilité de l'environnement dans lequel sont positionnés le dispositif transmetteur et le dispositif récepteur.

Selon un troisième aspect, l'invention concerne un programme d'ordinateur comportant des instructions pour la mise en oeuvre d'au moins une partie d'un procédé de sélection selon l'invention ou d'au moins une partie d'un procédé de communication selon l'invention lorsque ledit programme est exécuté par au moins un ordinateur.

Selon un quatrième aspect, l'invention concerne un support d'enregistrement lisible par un ordinateur sur lequel est enregistré un programme d'ordinateur selon l'invention.

Selon un cinquième aspect, l'invention concerne un système de communication par rétrodiffusion ambiante comportant une source émettrice ainsi qu'un dispositif transmetteur et un dispositif récepteur, la source étant associée à un précodeur de focalisation P comportant une première et une deuxième composantes pour focaliser des signaux vers respectivement le dispositif transmetteur et le dispositif récepteur. En outre, ladite source comporte :

- un module de déphasage, configuré pour déphaser, pour une valeur $\Phi\_i$ comprise dans l'intervalle $[0, 2\pi]$, une des composantes du précodeur P selon ladite valeur $\Phi\_i$, de sorte à obtenir un précodeur $Q\_i$,
- des moyens d'émission au moyen dudit précodeur $Q\_i$,

et ledit dispositif récepteur comporte :

- des moyens d'acquisition, configurés pour acquérir des mesures de puissance électromagnétique,
- un module de détermination, configuré pour déterminer, à partir de deux mesures acquises, une valeur représentative d'un écart de puissance entre lesdites deux mesures acquises,
- un module de sélection, configuré pour sélectionner, lorsque plusieurs valeurs ont été déterminées, une valeur maximale parmi lesdites valeurs déterminées.

Corrélativement, l'invention concerne également une source émettrice destinée à un système de communication par rétrodiffusion ambiante, ledit système comportant également un dispositif transmetteur et un dispositif récepteur, la source étant associée à un précodeur de focalisation P comportant une première et une deuxième composantes pour focaliser des signaux vers respectivement le dispositif transmetteur et le dispositif récepteur. En outre, ladite source comporte :

- un module de déphasage, configuré pour déphaser, pour une valeur $\Phi\_i$ comprise dans l'intervalle $[0, 2\pi]$, une des composantes du précodeur P selon ladite valeur $\Phi\_i$, de sorte à obtenir un précodeur $Q\_i$,
- des moyens d'émission au moyen dudit précodeur $Q\_i$.

Corrélativement, l'invention concerne également un dispositif récepteur destiné à un système de communication par rétrodiffusion ambiante, ledit système comportant également une source émettrice ainsi qu'un dispositif transmetteur, la source étant associée à un précodeur de focalisation P comportant une première et une deuxième composantes pour focaliser des signaux vers respectivement le dispositif transmetteur et le dispositif récepteur. Ledit dispositif récepteur comporte :

- des moyens d'acquisition, configurés pour acquérir des mesures de puissance électromagnétique,
- un module de détermination, configuré pour déterminer, à partir de deux mesures acquises, une valeur représentative d'un écart de puissance entre lesdites deux mesures acquises,
- un module de sélection, configuré pour sélectionner, lorsque plusieurs valeurs ont été déterminées, une valeur maximale parmi lesdites valeurs déterminées.

Dans des modes particuliers de réalisation, le dispositif récepteur comporte en outre un module de transmission, configuré pour transmettre vers la source une information identifiant un précodeur sur la base duquel a été déterminée ladite valeur maximale.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement un mode particulier de réalisation d'un système de communication par rétrodiffusion ambiante selon l'invention ;

[Fig. 2] la figure 2 représente, sous forme d'ordinogramme, les principales étapes d'un mode de mise en oeuvre d'un procédé de sélection selon l'invention ;

[Fig. 3] la figure 3 représente schématiquement un mode particulier de mise en oeuvre du procédé de sélection de la figure 2, dit « premier mode optimal » ;

[Fig. 4] la figure 4 représente schématiquement un mode particulier de mise en oeuvre du procédé de sélection de la figure 2, dit « deuxième mode optimal » ;

[Fig. 5] la figure 5 représente, sous forme d'ordinogramme, les principales étapes d'un procédé de communication selon l'invention.

Description des modes de réalisation

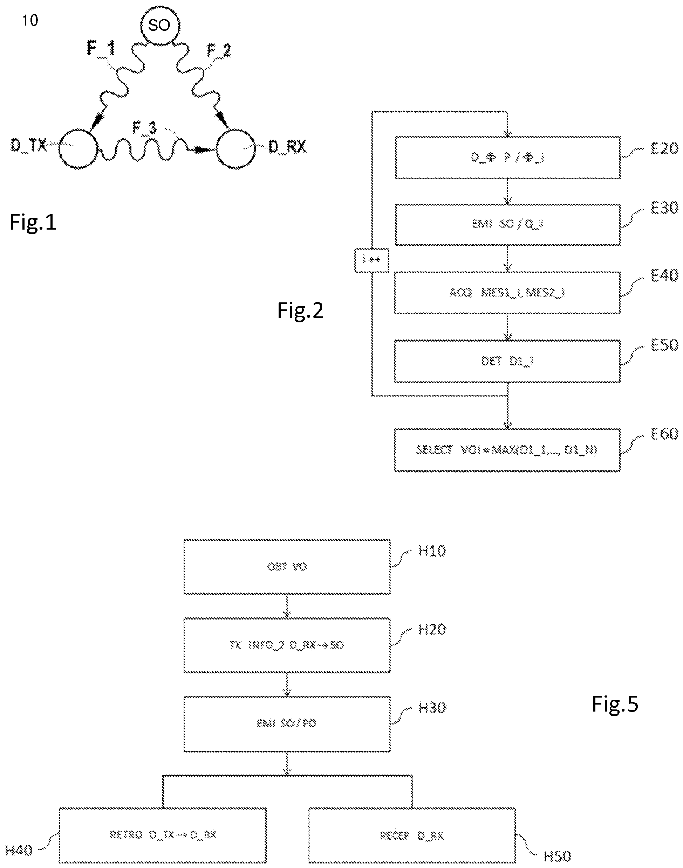

La figure 1 représente schématiquement, dans son environnement et dans un mode particulier de réalisation, un système 10 de communication par rétrodiffusion ambiante selon l'invention.

Le système 10 de communication comporte une source émettrice SO équipée d'une pluralité d'antennes ainsi que configurée pour émettre, dans une bande fréquentielle dite « bande d'émission » et via lesdites antennes, un signal radioélectrique dit « signal ambiant ». L'émission du signal ambiant s'effectue par exemple de manière permanente ou bien de manière récurrente.

Pour la suite de la description, et tel qu'illustré par la figure 1, on considère de manière nullement limitative le cas où le signal ambiant n'est émis que par une seule source. Le choix consistant à considérer une seule source est ici réalisé à des fins de simplification de la description uniquement. Aussi, aucune limitation n'est attachée au nombre de sources pouvant être considérée dans le cadre de la présente invention, les développements qui suivent étant en effet généralisables sans difficulté par l'homme du métier au cas d'une pluralité de sources.

Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

La suite de la description vise plus spécifiquement, mais de manière nullement limitative, un signal ambiant de téléphonie mobile 4G émis dans la bande d'émission [811 MHz, 821 MHz].

Il convient toutefois de préciser que l'invention reste applicable à d'autres types de signaux radioélectriques, comme par exemple un signal de téléphonie mobile autre que 4G (par exemple 2G, 3G, 5G), un signal Wi-Fi, un signal WiMax, un signal DVB-T, etc. D'une manière générale, l'homme du métier sait déterminer quels signaux d'émission peuvent être considérés pour la source SO selon les modes de mise en oeuvre envisagés pour et détaillés ci-après.

Le système 10 de communication comporte également un dispositif transmetteur D_TX ainsi qu'un dispositif récepteur D_RX respectivement configurés afin de communiquer entre eux par rétrodiffusion ambiante à partir du signal ambiant émis par la source SO.

Dans la suite de la description, et tel qu'illustré par la figure 1, on considère de manière non limitative que le système 10 de communication comprend un seul dispositif transmetteur D_TX et un seul dispositif récepteur D_RX. Il convient toutefois de préciser que l'invention est également applicable à un système de communication comprenant une pluralité de dispositifs transmetteurs et / ou une pluralité de dispositifs émetteurs, les développements nécessaires pour une telle généralisation pouvant être mis en oeuvre sans difficulté par l'homme du métier.

De manière connue en soi, la communication par rétrodiffusion ambiante consiste en l'exploitation du signal ambiant, par le dispositif transmetteur D_TX, pour envoyer des données vers ledit dispositif récepteur D_RX. Plus particulièrement, le dispositif transmetteur D_TX (respectivement le dispositif récepteur D_RX) est configuré pour effectuer, à partir du signal ambiant (respectivement à partir du signal rétrodiffusé), des traitements visant à rétrodiffuser ledit signal ambiant (respectivement visant à décoder ledit signal rétrodiffusé), en mettant en oeuvre un procédé de rétrodiffusion (respectivement un procédé de décodage).

A cet effet, le dispositif transmetteur D_TX (respectivement le dispositif récepteur D_RX) comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre le procédé de rétrodiffusion (respectivement le procédé de décodage).

Alternativement ou en complément, le dispositif transmetteur D_TX (respectivement le dispositif récepteur D_RX) comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre le procédé de rétrodiffusion (respectivement le procédé de décodage).

En d'autres termes, le dispositif transmetteur D_TX (respectivement le dispositif récepteur D_RX) comporte un ensemble de moyens configurés de façon logicielle (programme d'ordinateur spécifique) et / ou matérielle (FPGA, PLD, ASIC, etc.) pour mettre en oeuvre le procédé de rétrodiffusion (respectivement le procédé de décodage).

Les aspects spécifiques concernant l'émission de données par rétrodiffusion à destination du dispositif récepteur D_RX, ainsi que ceux concernant les techniques de décodage mises en oeuvre par ce dernier, sont connus de l'homme du métier et sortent du cadre de la présente invention. Par conséquent, ils ne sont pas détaillés ici plus avant.

Les ondes véhiculées par les signaux considérés dans la présente invention sont représentées de manière conceptuelle par des flèches ondulées dans la figure 1. Plus particulièrement, les flèches F_1 et F_2 représentent des ondes du signal ambiant émis par la source SO. Les ondes représentées par la flèche F_1 sont rétrodiffusées par le dispositif transmetteur D_TX, et les ondes du signal rétrodiffusé sont ici représentées par la flèche F_3. Les ondes représentées par la flèche F_2 ne sont quant à elles pas rétrodiffusées et parviennent directement au dispositif récepteur D_RX (i.e. il s'agit des ondes véhiculées par le signal interférent mentionné ci-avant). Seules les ondes représentées par la flèche F_3 transportent les données que le dispositif récepteur D_RX est destiné à décoder.

Il convient de noter que la figure 1 est donnée à titre purement illustratif. Ainsi, elle ne comporte par exemple aucun élément susceptible de réfléchir ou diffracter les ondes du signal ambiant. En ce sens, la figure 1 se veut être une version simplifiée de l'environnement dans lequel se trouvent les dispositifs transmetteur D_TX et récepteur D_RX. Il faut néanmoins garder à l'esprit que cet environnement est en général de configuration complexe et comporte, en pratique, des éléments (murs, arbres, sol, etc.) aptes à générer de telles réflexions et diffractions.

Dans le présent mode de réalisation, le dispositif transmetteur D_TX est équipé d'une antenne (non représentée sur les figures) configurée, de manière connue en soi, pour recevoir le signal ambiant mais aussi le rétrodiffuser vers le dispositif récepteur D_RX. Il convient de noter qu'aucune limitation n'est attachée au nombre d'antennes pouvant équiper le dispositif transmetteur D_TX.

En pratique, le dispositif transmetteur D_TX est associé à une bande fréquentielle, dite « bande d'influence », qui correspond à la bande fréquentielle dans laquelle l'antenne est apte à recevoir / rétrodiffuser des signaux. Lorsque ladite bande d'influence est incluse dans la bande d'émission associée à la source SO, elle est qualifiée de « bande de travail ». Par « bande de travail », on fait référence ici au fait que le dispositif transmetteur D_TX est compatible avec la source SO, à savoir donc que la rétrodiffusion peut être effectuée pour toute fréquence comprise dans ladite bande de travail.

Rien n'exclut cependant de considérer une bande d'influence qui ne soit pas incluse dans la bande d'émission. Il est néanmoins implicite que pour que le dispositif transmetteur D_TX soit en mesure de rétrodiffuser le signal ambiant, il convient que ladite bande d'influence soit d'intersection non vide avec ladite bande d'émission, la bande de travail correspondant dès lors à cette intersection.

Le dispositif transmetteur D_TX est également associé à des états de fonctionnement, à savoir un état dit de « rétrodiffusion » (le dispositif transmetteur D_TX rétrodiffuse le signal ambiant) ainsi qu'un état contraire dit de « non-rétrodiffusion » (le dispositif transmetteur D_TX est transparent au signal ambiant). Ces états correspondent à des configurations dans lesquelles ladite antenne est connectée à des impédances distinctes. Il s'agit typiquement d'une impédance positive, voire nulle, dans le cas d'un état de rétrodiffusion, et à l'inverse une impédance théoriquement infinie dans le cas de l'état de non-rétrodiffusion.

Le dispositif récepteur D_RX, quant à lui, est configuré pour :

- recevoir le signal ambiant émis par la source SO, dont notamment les éventuelles réflexions et diffractions subies par les ondes de ce signal en raison d'éléments placés dans l'environnement dans lequel se trouvent les dispositifs transmetteur D_TX et récepteur D_RX,
- recevoir le signal rétrodiffusé provenant du dispositif transmetteur D_TX.

A cet effet, et dans le présent mode de réalisation, ledit dispositif récepteur D_RX est équipé d'une antenne de réception (non représentée sur les figures). Par exemple, ledit dispositif récepteur D_RX est un smartphone.

Il convient cependant de noter qu'aucune limitation n'est attachée au nombre d'antennes pouvant équiper le dispositif récepteur D_RX. En outre, aucune limitation n'est non plus attachée aux formes structurelles pouvant être prises respectivement par la source SO et le dispositif récepteur D_RX. A titre d'exemples nullement limitatifs, les configurations suivantes sont envisageables :

- la source SO est un smartphone, et le dispositif récepteur D_RX est une station de base,
- la source SO est un smartphone, et le dispositif récepteur D_RX est également un smartphone,
- la source SO est une passerelle domestique (encore dite « box Internet ») émettant un signal Wi-Fi, et le dispositif récepteur D_RX est un smartphone.

Comme mentionné ci-avant, le dispositif récepteur D_RX est configuré pour décoder le signal rétrodiffusé par le dispositif transmetteur D_TX. A cet effet, il est connu que le décodage du signal rétrodiffusé ne peut être mis en oeuvre que si la variation de puissance électromagnétique, dite « écart de puissance » E_P, reçue par le dispositif récepteur D_RX, entre des instants où le dispositif transmetteur D_TX rétrodiffuse et ne rétrodiffuse pas alors que la source SO émet, dépasse un seuil déterminé, dit « seuil de puissance » S_P.

En pratique, ledit écart de puissance E_P est évalué suivant la formule suivante : $E\_P = |P\_R - P\_NR|$.

Dans cette formule, P_R (respectivement P_NR) correspond à une mesure de la puissance reçue par le dispositif récepteur D_RX lorsque le dispositif transmetteur D_TX est dans l'état de rétrodiffusion (respectivement dans l'état de non-rétrodiffusion). Autrement dit, P_NR correspond à une mesure de la puissance reçue du seul fait des ondes véhiculées par le signal interférent (flèche F_2 dans la figure 1). Ainsi, une condition selon laquelle le décodage peut être mis en oeuvre se traduit ici par E_P > S_P. On comprend dès lors que l'atteinte du seuil S_P dépend de l'écart entre P_R et P_NR.

Il convient toutefois de noter que bien que le décodage puisse être théoriquement mis en oeuvre dès lors que E_P > S_P, rien n'exclut qu'une condition de décodage plus restrictive soit imposée au dispositif récepteur D_RX, comme par exemple E_P > N x S_P où N est un nombre réel strictement plus grand que 1. Le fait d'imposer une condition plus restrictive permet d'accroitre la qualité de communication entre les dispositifs transmetteur D_TX et récepteur D_RX.

Ledit seuil de puissance S_P est par exemple défini à partir d'un taux d'erreur de décodage déterminé ainsi que du bruit de réception côté dispositif récepteur D_RX. Par « taux d'erreur de décodage », on fait référence ici à un taux dit « BER » (acronyme de l'expression anglo-saxonne « Bit Error Rate »). Plus particulièrement, des études ont montré que ledit taux d'erreur est une fonction décroissante du rapport entre l'écart E_P et ledit bruit de réception. Par conséquent, si on fixe un taux BER, on peut déterminer un rapport entre l'écart E_P et ledit bruit de réception correspondant, de sorte que ledit seuil de puissance S_P correspond alors au produit entre ce rapport et ledit bruit de réception. Concernant ces aspects, l'homme du métier peut se référer au document : « Demo Abstract : Real-Time Ambient Backscatter Démonstration », K. Rachedi, D. T. Phan-Huy, N. Selmene, A. Ourir, M. Gautier, A. Gati, A. Galindo-Serrano, R. Fara, J. De Rosny, IEEE INFOCOM 2019 Posters and Demos, 1st May 2019, Paris, France.

Par ailleurs, le dispositif récepteur D_RX comporte également des moyens d'acquisition configurés pour acquérir des mesures de puissance électromagnétique. Chacune de ces mesures correspond donc à un niveau de puissance électromagnétique reçue par le dispositif récepteur D_RX au moment des acquisitions.

Il est à noter que les mesures de puissance électromagnétique peuvent être acquises par le dispositif récepteur D_RX indifféremment de l'état (non-rétrodiffusion ou bien rétrodiffusion) dans lequel se trouve le dispositif transmetteur D_TX.

De manière conventionnelle, lesdits moyens d'acquisition comportent une chaine d'acquisition connectée à un élément sensible configuré pour fournir un signal électrique analogique représentatif de la puissance électromagnétique mesurée. Dans le présent exemple de réalisation, ledit élément sensible correspond à l'antenne de réception équipant le dispositif récepteur D_RX.

Ladite chaine d'acquisition comporte par exemple une carte d'acquisition configurée pour conditionner ledit signal électrique. Le conditionnement mis en oeuvre par la carte d'acquisition comporte par exemple, de manière connue en soi, une amplification et / ou un filtrage et / ou une conversion courant-puissance. D'une manière générale, la configuration de tels moyens d'acquisition est bien connue de l'homme du métier, et n'est donc pas détaillée ici plus avant.

Conformément à l'invention, la source est SO est associée à un précodeur de focalisation P comportant une première et une deuxième composantes pour focaliser des signaux vers respectivement le dispositif transmetteur D_TX et le dispositif récepteur D_RX. Au sens de la présente invention, de tels signaux émis respectivement vers les dispositifs transmetteur D_TX et récepteur D_RX font partie du signal ambiant.

Par « précodeur de focalisation », on fait référence ici au fait que la source SO est configurée pour émettre, via l'utilisation dudit précodeur de focalisation, des données avec une haute efficacité spectrale à destination des dispositifs transmetteur D_TX et récepteur D_RX. De cette manière, la source SO émet grâce à la formation de faisceaux (encore appelée « beamforming » dans la littérature anglo-saxonne) et en utilisant les mêmes ressources radio (comme par exemple les mêmes fréquences radio). Un tel précodeur de focalisation est classiquement basé sur la connaissance, par la source SO, d'un canal de propagation entre les dispositifs D_TX et D_XR.

Il est à noter que le précodeur de focalisation P admet, de manière conventionnelle (et à une transposition près), une représentation sous forme d'une matrice P dont :

- le nombre de lignes est égal au nombre d'antennes équipant la source SO,
- le nombre de colonnes est égal au nombre d'antennes équipant les dispositifs appartenant au système 10 de communication par rétrodiffusion ambiante.

Ainsi, dans le présent mode de réalisation, la matrice **P** représentant le précodeur P comporte deux colonnes, une première colonne (respectivement une deuxième colonne) correspondant à ladite première composante (respectivement ladite deuxième composante), et dont les coefficients (appartenant au corps des complexes) sont représentatifs de la contribution de chaque antenne de la source SO aux signaux transmis vers le dispositif D_TX (respectivement aux signaux transmis vers le dispositif D_RX).

Dans un exemple préféré de réalisation de l'invention, ledit précodeur P est de type forçage à zéro (ou ZF pour « Zéro Forcing » dans la littérature anglo-saxonne). Un tel précodeur ZF permet d'annuler les interférences entre le dispositif transmetteur D_TX et le dispositif récepteur D_RX, de sorte à maximiser le rapport signal sur interférence (ou SIR pour « Signal-to-Interference Ratio » dans la littérature anglo-saxonne).

Il convient toutefois de noter que tout précodeur de focalisation P connu de l'homme du métier peut être mis en oeuvre, et le choix d'un précodeur P particulier ne constitue qu'une variante d'implémentation de l'invention. Par exemple, le précodeur de focalisation P peut être de type minimisation d'une erreur quadratique (ou MMSE pour « Minimum Mean Square Error » dans la littérature anglo-saxonne). Un tel précodeur MMSE permet d'obtenir un compromis entre annulation d'interférences entre dispositifs D_TX, D_RX et puissance de bruit, de sorte à maximiser le rapport signal sur interférence plus bruit (ou SINR pour « Signal-to-Interference-plus-Noise Ratio » dans la littérature anglo-saxonne). En outre, ledit précodeur de focalisation P peut être configuré de sorte que les signaux transmis respectivement vers le dispositif transmetteur D_TX et vers le dispositif récepteur D_RX sont en phase.

Par ailleurs, et conformément à l'invention, la source SO ainsi que le dispositifs transmetteur D_TX er récepteur D_RX sont configurés pour effectuer des traitements visant à sélectionner une ou plusieurs valeurs représentatives dudit écart de puissance E_P, en mettant chacun en oeuvre au moins une partie d'un procédé de sélection comme cela est détaillé ultérieurement.

A cet effet, la source SO (respectivement le dispositif transmetteur D_TX / récepteur D_RX) comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre, au moins en partie, ledit procédé de sélection.

Alternativement ou en complément, la source SO (respectivement le dispositif transmetteur D_TX / récepteur D_RX) comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre, au moins en partie, ledit procédé de sélection.

En d'autres termes, la source SO (respectivement le dispositif transmetteur D_TX / récepteur D_RX) comporte un ensemble de moyens configurés de façon logicielle (programme d'ordinateur spécifique) et / ou matérielle (FPGA, PLD, ASIC, etc.) pour mettre en oeuvre, au moins en partie, ledit procédé de sélection.

Il est à noter que les programmes mis en oeuvre par respectivement la source SO et le dispositif transmetteur D_TX / récepteur D_RX peuvent également être considérés comme des sous-programmes d'un programme, dit « programme général », couvert par la présente invention.

La figure 2 représente, sous forme d'ordinogramme, les principales étapes d'un mode de mise en oeuvre du procédé de sélection selon l'invention.

Tel qu'illustré par la figure 2, ledit procédé de sélection comporte, pour une valeur $\Phi_i$ comprise dans l'intervalle $[0, 2\pi]$, une pluralité d'étapes, à savoir tout d'abord une étape E20 de déphasage d'une des composantes du précodeur de focalisation P selon ladite valeur $\Phi_i$. Ladite étape E20 de déphasage (encore notée « D_$\Phi$ P / $\Phi_i$ » dans la figure 2) est mise en oeuvre par la source SO, plus particulièrement par un module de déphasage équipant ladite source SO.

Par « déphasage d'une composante », on fait référence ici à une modification de la phase d'un signal émis par la source SO à destination d'un desdits dispositifs transmetteur D_TX ou récepteur D_RX selon la composante considérée. En pratique, le déphasage d'une composante est réalisé en multipliant la colonne de la matrice P associée à cette composante par le nombre complexe $e^{j\Phi_i}$, nombre dans lequel « j » correspond au nombre complexe dont le carré (i.e. $j^2$) est égal à -1. Dit encore autrement, le déphasage d'une composante de la matrice **P** correspond au fait d'appliquer une rotation d'angle $\Phi_i$ à cette composante.

Comme cela est explicité plus en détails ultérieurement, en considérant un déphasage d'une des composantes du précodeur P, on offre la possibilité de faire varier l'écart de puissance E_P.

Pour la suite de la description, on considère de manière nullement limitative que la composante déphasée au cours de ladite étape E20 de déphasage est la deuxième composante du précodeur P (i.e. la composante associée au dispositif récepteur D_RX). Il convient toutefois de préciser que l'invention est également applicable dans le cas où la première composante du précodeur P est déphasée (i.e. la composante associée au dispositif transmetteur D_TX), cet aspect ne constituant par un facteur limitant de l'invention.

Aussi, à l'issue de l'étape E20 de déphasage, on obtient un précodeur Q_i correspondant au précodeur de focalisation P déphasé. On note que le fait d'avoir déphasé le précodeur P, afin d'obtenir le précodeur Q_i, ne modifie pas le fait que les première et une deuxième composantes dudit précodeur Q_i permettent de focaliser des signaux vers respectivement le dispositif transmetteur D_TX et le dispositif récepteur D_RX.

Le procédé de sélection comporte également une étape E30 d'émission au moyen dudit précodeur Q_i. Ladite étape E30 d'émission (encore notée « EMI SO / Q_i » dans la figure 2) est mise en oeuvre par la source SO, plus particulièrement par des moyens d'émission de la source SO, ces moyens d'émission comportant, notamment, les antennes utilisées pour émettre le signal ambiant.

Au cours de ladite étape E30 d'émission, le procédé de sélection comporte une étape E40 d'acquisition d'une première mesure MES1_i et d'une deuxième mesure MES2_i de puissance électromagnétique. Ladite étape E40 d'acquisition (encore notée « ACQ MES1_i, MES2_i » dans la figure 2) est mise en oeuvre par le dispositif récepteur D_RX, plus particulièrement par les moyens d'acquisition équipant ledit dispositif récepteur D_RX.

Plus particulièrement, ladite première mesure (respectivement ladite deuxième mesure) est acquise lorsque le dispositif transmetteur D_TX est dans l'état de non-rétrodiffusion (respectivement dans l'état de rétrodiffusion). Il est en outre évident que les acquisitions sont effectuées dans ladite bande de travail, puisque c'est dans cette bande fréquentielle que le dispositif transmetteur D_TX est compatible avec la source SO pour rétrodiffuser, comme cela a été mentionné ci-avant.

Dans un mode particulier de mise en oeuvre, le dispositif transmetteur D_TX est associé à des périodes temporelles déterminées et distinctes entre elles, ainsi que configuré pour rétrodiffuser au cours desdites périodes temporelles. Le dispositif récepteur D_RX, quant à lui, a connaissance desdites périodes temporelles, et est configuré pour se synchroniser avec au moins une de ces périodes, de sorte à pouvoir réaliser au moins une mesure de puissance électromagnétique lorsque le dispositif transmetteur D_TX rétrodiffuse.

Alternativement, le dispositif récepteur D_RX effectue des acquisitions de mesures de puissance de manière récurrente, par exemple suivant un pas temporel constant. En outre, le dispositif transmetteur D_TX est apte à transmettre au dispositif récepteur D_RX un message l'informant du passage de l'état de non-rétrodiffusion à l'état de rétrodiffusion. De cette manière, une mesure acquise après réception d'un tel message peut être associée audit état de rétrodiffusion.

Une fois lesdites première et deuxième mesures acquises, le procédé de sélection comporte une étape E50 de détermination d'une valeur D1_i représentative de l'écart de puissance E_P entre lesdites première et deuxième mesures. Ladite étape E50 de détermination (encore notée « DET D1_i » dans la figure 2) est mise en oeuvre par le dispositif récepteur D_RX, plus particulièrement par un module de détermination équipant ledit dispositif récepteur D_RX. On note que ledit module de détermination est plus généralement configuré pour déterminer un écart de puissance entre deux mesures de puissance électromagnétique quelconque.

Dans un mode particulier de mise en oeuvre, la valeur D1_i est déterminée égale à l'écart de puissance E_P entre lesdites première et deuxième mesures.

Rien n'exclut cependant de considérer une autre détermination de la valeur D1_i. Par exemple, la valeur D1_i peut être déterminée égale à une pondération dudit écart E_P, cette pondération pouvant prendre la forme d'un coefficient multiplicatif appliqué audit écart E_P, comme par exemple un coefficient correspondant au rapport entre un nombre positif, par exemple égal à 2, et la somme desdites première et deuxième mesures de puissance électromagnétique.

D'une manière générale, aucune limitation n'est attachée à la détermination de la valeur D1_i dès lors que celle-ci est représentative de l'écart de puissance E_P entre lesdites première et deuxième mesures.

Par ailleurs, conformément à l'invention, lesdites étapes de déphasage E20, d'émission E30, d'acquisition E40 et de détermination E50 sont itérées pour une pluralité de valeurs $\Phi\_1$, ..., $\Phi\_N$ distinctes entre elles (N étant donc un indice entier strictement supérieur à 1).

Le fait de considérer une pluralité de valeurs $\Phi\_1$, ..., $\Phi\_N$ permet d'obtenir, à l'issue desdites itérations, une pluralité de valeurs D1_1, ..., D1_N.

Dans un mode particulier de mise en oeuvre, lesdites étapes de déphasage E20, d'émission E30, d'acquisition E40 et de détermination E50 sont itérées tant que la valeur D1_i déterminée au cours d'une étape E50 de détermination pour une valeur $\Phi\_i$ est inférieure à un seuil prédéterminé. Procéder de la sorte permet de limiter le nombre d'itérations, et donc a fortiori de limiter le temps consacré à effectuer lesdites itérations. Les ressources de calcul du dispositif récepteur D_RX ainsi que de la source SO sont donc préservées.

Ledit seuil prédéterminé correspond par exemple audit seuil de puissance S_P, de sorte à garantir que la valeur $\Phi\_i$ considérée au cours de la dernière itération est associée à un taux d'erreur de décodage inférieur à une valeur déterminée. Rien n'exclut cependant de considérer d'autres valeurs pour ledit seuil prédéterminé, comme par exemple un multiple dudit seuil de puissance S_P, comme cela a été mentionné auparavant.

Il est à noter que, dans ce mode particulier de mise en oeuvre, l'arrêt des itérations est par exemple consécutif à l'envoi d'un message par le dispositif récepteur D_RX à la source SO lorsque ledit seuil prédéterminé a été atteint. Un tel message comporte par exemple une information indiquant à la source SO que le seuil est atteint, de sorte que ladite source SO cesse d'appliquer de déphaser le précodeur de focalisation P.

Rien n'exclut toutefois de considérer un arrêt des itérations mis en oeuvre différemment. Par exemple, un message indiquant que le seuil prédéterminé a été atteint est transmis à une entité autre que la source SO, cette entité étant configurée pour à son tour informer la source SO qui stoppe dès lors de déphaser le précodeur de focalisation P. Ladite autre entité est par exemple un dispositif de contrôle apte à centraliser des messages émis par le dispositif récepteur D_RX ainsi qu'à vérifier l'intégrité de ces messages.

Dans un autre mode particulier de mise en oeuvre, lesdites étapes de déphasage E20, d'émission E30, d'acquisition E40 et de détermination E50 sont itérées un nombre déterminé de fois. Procéder de la sorte offre la possibilité d'obtenir de façon certaine autant de valeur D1_i que le nombre d'itérations effectuées. On comprend en outre que plus le nombre d'itérations est grand, plus la valeur maximale parmi les valeurs D1_1, ..., D1_N déterminées est grande, et donc plus la probabilité qu'au moins une desdites valeurs soit associée à un écart E_P supérieur au seuil de puissance S_P est grande.

Quel que soit le mode particulier de mise en oeuvre envisagé (itérations tant que le seuil de puissance n'est pas atteint, ou bien un nombre prédéterminé de fois), lesdites valeurs Φ_1, ..., Φ_N sont par exemple échantillonnées suivant une échelle logarithmique. Selon un autre exemple, lesdites valeurs Φ_1, ..., Φ_N sont échantillonnées suivant une échelle linéaire.

D'une manière générale, aucune limitation n'est attachée à l'échelle de répartition des valeurs Φ_1, ..., Φ_N, cet aspect n'étant pas un facteur limitant de l'invention.

Préférentiellement, pour une échelle de répartition considérée (par exemple logarithmique ou bien linéaire), chaque valeur Φ_i est strictement inférieur à $\pi/2$.

En outre, et quel que soit le mode particulier de mise en oeuvre envisagé, les valeurs Φ_1, ..., Φ_N comportent préférentiellement une valeur minimale égale à 0. De manière plus spécifiquement, dans le cas du mode particulier selon lequel un nombre prédéterminé d'itérations est considéré, les valeurs Φ_1, ..., Φ_N comportent aussi préférentiellement une valeur maximale égale à $2\pi-\varepsilon$, où $\varepsilon$ est un paramètre choisi petit de sorte que les valeurs Φ_1, ..., Φ_N balayent un intervalle large inclus dans $[0, 2\pi]$. Par exemple, $\varepsilon$ est égal à 0,1.

Par ailleurs, les valeurs Φ_1, ..., Φ_N sont par exemple prédéterminées et stockées par les moyens de mémorisation de la source SO.

Alternativement, les valeurs Φ_1, ..., Φ_N sont stockées dans une base de données localisée sur un serveur dédié et auquel a accès la source SO.

Selon encore une autre alternative, la source SO est configurée pour exécuter, en une seule fois ou bien de manière récurrente à chaque itération, une fonction de calcul desdites valeurs Φ_i, ladite fonction de calcul étant enregistrée par les moyens de mémorisation dudit dispositif récepteur D_RX.

Rien n'exclut non plus que les valeurs Φ_1, ..., Φ_N soient prédéterminées ou calculées au moyen d'une fonction de calcul par une entité autre que la source SO, comme par le dispositif récepteur D_RX, le dispositif transmetteur D_TX ou bien encore un autre dispositif de traitement, puis transmises à la source SO.

Une fois que les étapes de déphasage E20, d'émission E30, d'acquisition E40 et de détermination E50 ont été itérées, le procédé de sélection comporte également une étape E60 de sélection, par le dispositif récepteur, d'une valeur, dite « valeur optimale intermédiaire » VOI, maximale parmi les valeurs D1_1, ..., D1_N déterminées. Ladite étape E60 de sélection (encore notée « SELECT VOI = MAX(D1_1,...,D1_N) » dans la figure 2) est mise en oeuvre par le dispositif récepteur D_RX, plus particulièrement par un module de sélection équipant ledit dispositif récepteur D_RX. On note que ledit module de sélection est plus généralement configuré pour sélectionner une valeur maximale parmi une pluralité de valeurs quelconques.

Le fait de sélectionner une telle valeur optimale intermédiaire VOI permet donc finalement d'identifier un précodeur Q_i, parmi les précodeurs Q_1,..., Q_N obtenus, maximisant le niveau de puissance électromagnétique reçu par le dispositif récepteur D_RX, lorsque le déphasage du précodeur de focalisation P est considéré comme étant une variable d'optimisation. Le précodeur Q_i ainsi identifié peut ensuite être utilisé par la source SO pour émettre, comme cela est détaillé ultérieurement.

La sélection d'une telle valeur optimale intermédiaire VOI s'effectue de manière connue en soi. A titre d'exemple nullement limitatif, un algorithme de tri est appliqué de sorte à classer les valeurs D1_1, ..., D1_N par ordre croissant ou décroissant. Tout algorithme de tri connu de l'homme de l'art peut être mis en oeuvre, et le choix d'un algorithme de tri particulier ne constitue qu'une variante d'implémentation de l'invention.

La suite de la description vise à détailler deux modes particuliers de mise en oeuvre du procédé de sélection, notamment des modes dans lesquels une optimisation concernant une répartition de puissance (ou encore de partage de puissance), entre les première et deuxième composantes du précodeur P, est recherchée, en sus de l'optimisation détaillée ci-avant en référence au déphasage dudit précodeur P.

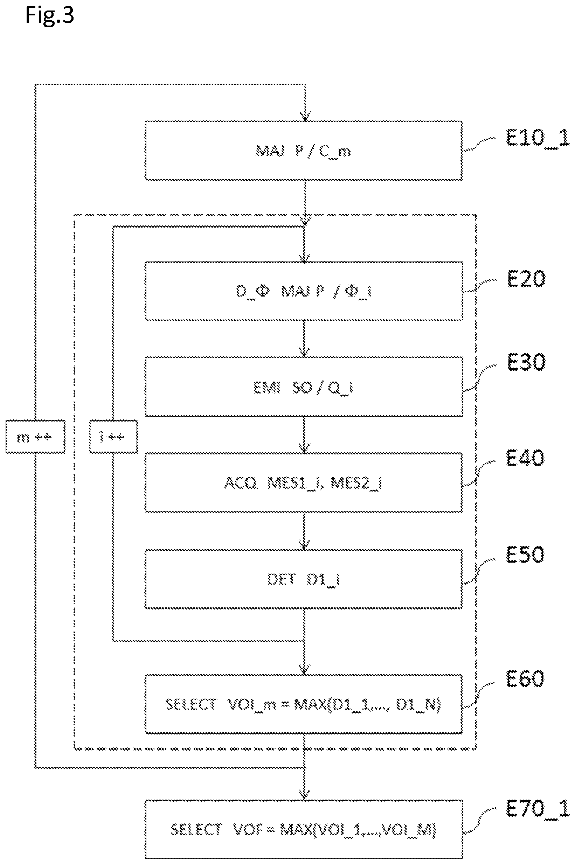

La figure 3 représente schématiquement un mode particulier de mise en oeuvre du procédé de sélection de la figure 2, dit « premier mode optimal ».

Tel qu'illustré par la figure 3, le procédé de sélection comporte, dans ledit premier mode optimal, une pluralité d'étapes E10_1 de mise à jour du précodeur de focalisation P, chaque étape E10_1 de mise à jour (notée « MAJ P / C_m » dans la figure 3) étant mise en oeuvre avant la mise en oeuvre des étapes de déphasage E20, d'émission E30, d'acquisition E40 et de détermination E50. En outre, l'ensemble d'étapes formé :

- des itérations des étapes de déphasage E20, d'émission E30, d'acquisition E40 et de détermination E50 pour les valeurs $\Phi\_1, ..., \Phi\_N$, et
- de l'étape E60 de sélection d'une valeur optimale intermédiaire,

est itéré pour chacune des étapes E10_1 de mise à jour considérée.

Chaque étape E10_1 de mise à jour est mise en oeuvre par la source SO, plus particulièrement par un module de mise à jour équipant ladite source SO.

On comprend qu'à chaque étape E10_1 de mise à jour du précodeur P correspond une valeur optimale intermédiaire obtenue lors de l'étape de sélection E60 appartenant à l'ensemble d'étapes considéré pour ladite étape E10_1 de mise à jour.

De plus, il est à noter que l'étape E20 de déphasage mise en oeuvre au cours d'un ensemble d'étapes est bien entendu appliquée au précodeur P mis à jour obtenu grâce à l'étape E10_1 de mise à jour considérée pour ledit ensemble d'étapes. Autrement dit, à chaque étape E10_1 de mise à jour correspond un précodeur P mis à jour, et chaque précodeur P mis à jour (du fait de la pluralité d'étapes E10_1 de mise à jour) est déphasé pour chacune des valeurs $\Phi\_1, ..., \Phi\_N$. En conséquence, pour chaque étape E10_1 de mise à jour, on obtient N précodeur Q_i à partir du précodeur P mis à jour pour ladite étape E10_1, et les mesures de puissance sont acquises pour chacun de ces précodeurs Q_i.

Plus particulièrement, chaque étape E10_1 de mise à jour du précodeur P est mise en oeuvre de sorte que le précodeur P mis à jour correspond au précodeur P dont les première et deuxième composantes sont pondérées par respectivement un premier coefficient et un deuxième coefficient strictement positifs. Lesdits premier et deuxième coefficients considérés au cours d'une étape E10_1 forment un couple de coefficients C_m (m étant un indice entier supérieur ou égal à 1).

Par ailleurs, les couples de premier et deuxième coefficients considérés au cours desdites étapes E10_1 de mise à jour sont distincts entre eux. On note VOI_m la valeur optimale intermédiaire obtenue pour une étape E10_1 associée à un couple C_m.

Ainsi, on comprend qu'une mise à jour du précodeur P revient à multiplier la première colonne (respectivement la deuxième colonne) de la matrice P par ledit premier coefficient (respectivement par ledit deuxième coefficient) considéré pour cette mise à jour.

On comprend également qu'en effectuant une telle mise à jour du précodeur P, on modifie la répartition de puissance électromagnétique transmise par la source SO (du fait de l'utilisation dudit précodeur P mis à jour) vers chacun des dispositifs transmetteur D_TX et récepteur D_RX.

Par exemple, le premier coefficient est égal à une valeur $\delta$, où $\delta$ est choisi dans l'intervalle $]0,1[$, et le deuxième coefficient est égal à $\sqrt{1 - \delta^2}$. Selon cet exemple, la puissance transmise vers le dispositif transmetteur D_TX est multipliée par $\delta^2$ alors que la puissance transmise vers le dispositif récepteur D_RX est multipliée par $1 - \delta^2$.

Rien n'exclut cependant de considérer d'autres valeurs pour lesdits premier et deuxième coefficients. D'une manière générale, aucune limitation n'est attachée au choix desdits premier et deuxième coefficients dès lors qu'ils sont tous deux strictement positifs.

Suivant des dispositions similaires à celles mentionnées ci-avant pour le nombre de valeurs $\Phi\_1, ..., \Phi\_N$ à considérer, le nombre d'étapes E10_1 de mise à jour est par exemple déterminé.

Selon un autre exemple, ledit ensemble d'étapes est itéré tant que la valeur optimale intermédiaire VOI_m sélectionnée au cours d'une étape E60 de sélection est inférieure à un seuil prédéterminé. Le nombre d'étapes E10_1 de mise à jour est alors égal au nombre d'itérations effectuées pour atteindre ledit seuil prédéterminé. Ledit seuil prédéterminé correspond par exemple audit seuil de puissance S_P. Rien n'exclut cependant de considérer d'autres valeurs pour ledit seuil prédéterminé, comme par exemple un multiple dudit seuil de puissance S_P, comme cela a été mentionné auparavant.

Pour la suite de la description, on note M le nombre d'itérations de l'étape E10_1. Par conséquent, M couples C_1, ..., C_M sont considérés.

Par ailleurs, une fois que ledit ensemble d'étapes a été itéré pour chacune des étapes E10_1 de mise à jour, le procédé de sélection comporte également une étape E70_1 de sélection d'une valeur, dite « valeur optimale finale » VOF, maximale parmi les valeurs optimales intermédiaires VOI_1, ..., VOI_M qui ont été obtenues du fait desdites itérations.

Le fait de sélectionner une telle valeur optimale finale VOF permet donc finalement d'identifier un précodeur, parmi tous les précodeurs obtenus suite aux étapes E20 de déphasage qui sont mises en oeuvre (du fait de la pluralité d'étapes E10_1 de mise à jour considérée ainsi que des différentes valeurs $\Phi\_1, ..., \Phi\_N$ considérées), maximisant le niveau de puissance électromagnétique reçu par le dispositif récepteur D_RX. Il importe de noter que dans ledit premier mode optimal, le déphasage d'un précodeur P mis à jour est considéré comme étant une variable d'optimisation, mais que la mise à jour elle-même du précodeur P (via lesdits couples C_1, ..., C_M de premier et deuxième coefficients) est également considérée comme étant une variable d'optimisation. Dit encore autrement, ledit premier mode optimal comporte deux boucles d'optimisation, une première boucle d'optimisation portant sur les valeurs de déphasage $\Phi\_1$, ..., $\Phi\_N$ et qui est incluse dans une boucle d'optimisation portant quant à elle sur la pondération des première et deuxième composantes du précodeur de focalisation P.

Le précodeur ainsi identifié, grâce à la mise en oeuvre du premier mode optimal, peut ensuite être utilisé par la source SO pour émettre, comme cela est détaillé ultérieurement.

Suivant des dispositions similaires à celles mentionnées ci-avant pour la sélection d'une valeur optimale intermédiaire, la sélection d'une telle valeur optimale finale VOF s'effectue de manière connue en soi. A titre d'exemple nullement limitatif, un algorithme de tri est appliqué de sorte à classer toutes les valeurs optimales intermédiaires VOI_1, ..., VOI_M obtenues par ordre croissant ou décroissant. Tout algorithme de tri connu de l'homme de l'art peut être mis en oeuvre, et le choix d'un algorithme de tri particulier ne constitue qu'une variante d'implémentation de l'invention.

Nous explicitons ci-après le cadre théorique mathématique permettant de modéliser et de mettre en oeuvre numériquement, notamment, les différentes étapes dudit premier mode optimal. Afin de simplifier la présentation de ce cadre théorique, on considère de manière nullement limitative que le précodeur de focalisation P est de type ZF (i.e. forçage à zéro).

Par ailleurs, on adopte la notation selon laquelle le terme positionné en ligne p et colonne q d'une matrice **M** s'écrit $\mathbf{M}_{p,q}$, ainsi que la notation selon laquelle le terme en position p d'un vecteur **v** s'écrit $\mathbf{v}_p$. Enfin, la partie réelle d'un nombre complexe z est notée $\Re(z)$.

On désigne par :

- $K \in \mathbb{N}$ le nombre d'antennes de la source ;

- $\mathbf{h}^{SR} \in \mathbb{C}^{K \times 1}$ le vecteur comportant le canal de propagation direct entre chaque antenne k (k étant un indice variant entre 1 et K) de la source SO et l'antenne du dispositif récepteur D_RX ;

- $\mathbf{h}^{STR} \in \mathbb{C}^{K \times 1}$ le vecteur comportant le canal de propagation entre chaque antenne k de la source SO et l'antenne du dispositif récepteur D_RX, après rétrodiffusion par le dispositif transmetteur D_TX, et prenant en compte uniquement le signal rétrodiffusé par ledit dispositif transmetteur D_TX (i.e. ne prenant pas en compte $\mathbf{h}^{SR}$);

- $\mathbf{h}^{ST} \in \mathbb{C}^{K \times 1}$ le vecteur comportant le canal de propagation entre chaque antenne k de la source SO et l'antenne du dispositif transmetteur D_TX ;

- $h^{TR} \in \mathbb{C}$ le canal de propagation entre l'antenne du dispositif transmetteur D_TX et l'antenne du dispositif récepteur D_RX ;

- $\mathbf{H} \in \mathbb{C}^{2 \times K}$ la matrice complexe telle que $\mathbf{H}_{1,k} = \mathbf{h}_k^{ST}$ et $\mathbf{H}_{2,k} = \mathbf{h}_k^{SR}$, ladite matrice **H** étant représentative d'un canal de propagation global entre la source SO est les dispositifs transmetteur D_TX et récepteur D_RX, sans prendre en compte le signal rétrodiffusé par ledit dispositif transmetteur D_TX. Dans la mesure où la source SO est associée au précodeur de focalisation P, ladite source SO a la connaissance de ladite matrice **H.**

A partir de ces notations, il est possible d'écrire la relation suivante : $\mathbf{h}_k^{STR} = \mathbf{h}_k^{ST} h^{TR}$. En outre, on a également les relations suivantes :

- lorsque le dispositif transmetteur D_TX est dans l'état de non-rétrodiffusion, le canal $\mathbf{h}_k^{trans}$ de propagation complet entre l'antenne k de la source SO et l'antenne du dispositif récepteur D_RX est égal à $\mathbf{h}_k^{SR}$ ;

- lorsque le dispositif transmetteur D_TX est dans l'état de rétrodiffusion, le canal $\mathbf{h}_k^{diff}$ de propagation complet entre l'antenne k de la source SO et l'antenne du dispositif récepteur D_RX est égal à $\mathbf{h}_k^{STR} + \mathbf{h}_k^{SR}$.

Eu égard aux notations introduites, la matrice $\mathbf{P} \in \mathbb{C}^{K \times 2}$ représentant le précodeur P vérifie la relation suivante :

$$P = H^\dagger (HH^\dagger)^{-1},$$

relation dans laquelle † correspond à l'opérateur transposé-conjugué. On note qu'étant donnée l'écriture de **P,** on a que **HP** correspond à la matrice identité.

Introduisons également les notations suivantes :

- $\Gamma^{(m)} = \begin{bmatrix} \delta^{(m)} & 0 \\ 0 & \sqrt{1-(\delta^{(m)})^2} \end{bmatrix}$ désigne une matrice de partage de puissance (ou encore de répartition de puissance) utilisée au cours d'une étape E10_1 de mise à jour du précodeur P, et dans laquelle $\delta^{(m)}$ est compris dans l'intervalle ]0,1[. A chaque indice m fixé correspond une matrice de partage de puissance, et donc également une étape E10_1 de mise à jour du précodeur P. A titre illustratif, trois matrices de partage $\Gamma^{(1)},\Gamma^{(2)},\Gamma^{(3)}$ sont utilisées, et elles sont respectivement déterminées pour $\delta^{(1)}$ = 0,3, $\delta^{(2)}$ = 0,6 et $\delta^{(3)}$ = 0,9 ;

- $D^{(i)} = \begin{bmatrix} 1 & 0 \\ 0 & e^{j\Phi\_i} \end{bmatrix}$ désigne une matrice de déphasage utilisée au cours d'une étape E20 de déphasage, et dans laquelle $\Phi\_i$ est compris dans l'intervalle [0, 2π]. A chaque indice i fixé correspond une matrice de déphasage. A titre illustratif, six matrices de déphasage $D^{(1)},D^{(2)},D^{(3)},D^{(4)},D^{(5)},D^{(6)}$ sont utilisées, et elles sont respectivement déterminées pour $\Phi\_1 = 0$, $\Phi\_2 = π / 6$, $\Phi\_3 = π / 3$, $\Phi\_4 = π / 2$, $\Phi\_5 = 2π / 3$ et $\Phi\_6 = 5π / 6$ ;

- $S^{(i,m)} \in \mathbb{C}^{K \times 2}$ désigne une matrice de précodage vérifiant $S^{(i,m)} = \alpha^{(i,m)}P\Gamma^{(m)}D^{(i)} = \alpha^{(i,m)}PD^{(i)}\Gamma^{(m)}$. Dans cette expression, le facteur $\alpha^{(i,m)}$ est un facteur dit de « normalisation » dont la valeur est déterminée de sorte que la matrice de précodage $S^{(i,m)}$ est unitaire, c'est-à-dire de sorte que

$$\sum_{l=1}^{2}\sum_{k=1}^{K}\left|S_{k,l}^{(i,m)}\right|^2 = \sum_{k=1}^{K}\left|S_{k,1}^{(i,m)}\right|^2 + \sum_{k=1}^{K}\left|S_{k,2}^{(i,m)}\right|^2 = 1.$$

Dans cette dernière expression, on a que $S_{k,1}^{(i,m)} = \alpha^{(i,m)}\delta^{(m)}P_{k,1}$ ainsi que $S_{k,2}^{(i,m)} = \alpha^{(i,m)}\sqrt{1-(\delta^{(m)})^2}e^{j\Phi\_i}P_{k,2}$ si bien que $\alpha^{(i,m)}$ est déterminé par l'expression suivante :

$$\alpha^{(i,m)} = \frac{1}{\sqrt{(\delta^{(m)})^2 \sum_{k=1}^{K}\left|P_{k,1}\right|^2 + (1-(\delta^{(m)})^2)\sum_{k=1}^{K}\left|P_{k,2}\right|^2}}.$$

Il convient également de noter que ledit précodeur Q_i, obtenu au cours d'une étape E20 de déphasage, admet ici, au regard des notations introduites, la représentation matricielle $PD^{(i)}$.

On note également $G^{(i,m)} = HS^{(i,m)} \in \mathbb{C}^{2 \times 2}$ la matrice représentative d'un canal équivalent entre la source SO et les dispositifs transmetteur D_TX et récepteur D_RX lorsque ladite source SO émet au moyen du précodeur dont la matrice associée est $S^{(i,m)}$. Au regard des notations introduites précédemment, on a les relations suivantes :

$$G^{(i,m)} = \alpha^{(i,m)}\Gamma^{(m)}D^{(i)} = \begin{bmatrix} \alpha^{(i,m)}\delta^{(m)} & 0 \\ 0 & \alpha^{(i,m)}\sqrt{1-(\delta^{(m)})^2}e^{j\Phi\_i} \end{bmatrix}.$$

Aussi, et dans un premier temps, considérons le cas où le dispositif transmetteur D_TX est dans l'état de non-rétrodiffusion (le signal reçu dans ce cas correspond donc uniquement au signal interférent acheminé directement entre la source SO et ledit dispositif récepteur D_RX). Dès lors, eu égard à l'expression de la matrice $G^{(i,m)}$, on a que le dispositif récepteur D_RX reçoit un signal $s^{trans} = \alpha^{(i,m)}\sqrt{1-(\delta^{(m)})^2}e^{j\Phi\_i}$ dont la puissance associée est :

$$p^{trans} = |s^{trans}|^2 = (\alpha^{(i,m)})^2(1-(\delta^{(m)})^2).$$

Dans un deuxième temps, considérons maintenant le cas où le dispositif transmetteur D_TX est dans l'état de rétrodiffusion. Dès lors, on a que le dispositif récepteur D_RX reçoit un signal

$$s^{diff} = \alpha^{(i,m)}\delta^{(m)}h^{TR} + \alpha^{(i,m)}\sqrt{1-(\delta^{(m)})^2}e^{j\Phi\_i}$$ dont la puissance associée est :

$$p^{diff} = \left|s^{diff}\right|^2 = (\alpha^{(i,m)}\delta^{(m)})^2|h^{TR}|^2 + \left(\alpha^{(i,m)}\right)^2\left(1-(\delta^{(m)})^2\right) +$$
$$2(\alpha^{(i,m)})^2\delta^m\sqrt{1-(\delta^m)^2}\,\Re(h^{TR}e^{-j\Phi\_i}).$$

Par conséquent, l'écart de puissance E_P entre les puissances correspondant à ces deux cas est donné par :

$$E\_P = |p^{diff} - p^{trans}| = \left|(\alpha^{(i,m)}\delta^{(m)})^2|h^{TR}|^2 + 2(\alpha^{(i,m)})^2\delta^m\sqrt{1-(\delta^m)^2}\,\Re(h^{TR}e^{-j\Phi\_i})\right|.$$

Pour un indice m fixé (i.e. pour une étape E10_1 de mise à jour), ledit écart de puissance E_P est maximisé quand la phase $\Phi\_i$ compense la phase de $h^{TR}$, c'est-à-dire quand :

$$h^{TR}e^{-j\Phi\_i} = |h^{TR}|.$$

Ainsi, une valeur optimale intermédiaire est obtenue à m fixé pour la valeur $\Phi\_i$ maximisant la quantité E_P dont l'expression est donnée ci-dessus.

Notons i*(m) l'indice parmi par les indices i = 1,..., N, tel que pour un indice m fixé, une valeur optimale intermédiaire est obtenue pour la valeur $\Phi\_i*(m)$. L'indice m ayant été fixé jusqu'à présent, il est encore possible de maximiser E_P en considérant les différentes valeurs prises par le coefficient $\delta^m$ en fonction de l'indice m.

Notons m* l'indice tel qu'une valeur optimale finale VOF est obtenue avec le coefficient $\delta^{m*}$. En définitive, il résulte des considérations précédentes que le précodeur permettant de maximiser l'écart de puissance E_P, et donc in fine de maximiser le niveau de puissance électromagnétique reçu par le dispositif récepteur D_RX, est le précodeur dont la matrice associée est $\mathbf{S}^{(i*(m*),m*)}$.

Il ressort des éléments explicités ci-avant pour ledit cadre théorique mathématique que les optimisations portant respectivement sur le déphasage et sur la répartition de puissance du précodeur P peuvent être mises en oeuvre dans un ordre qui diffère de celui envisagé pour ledit premier mode optimal.

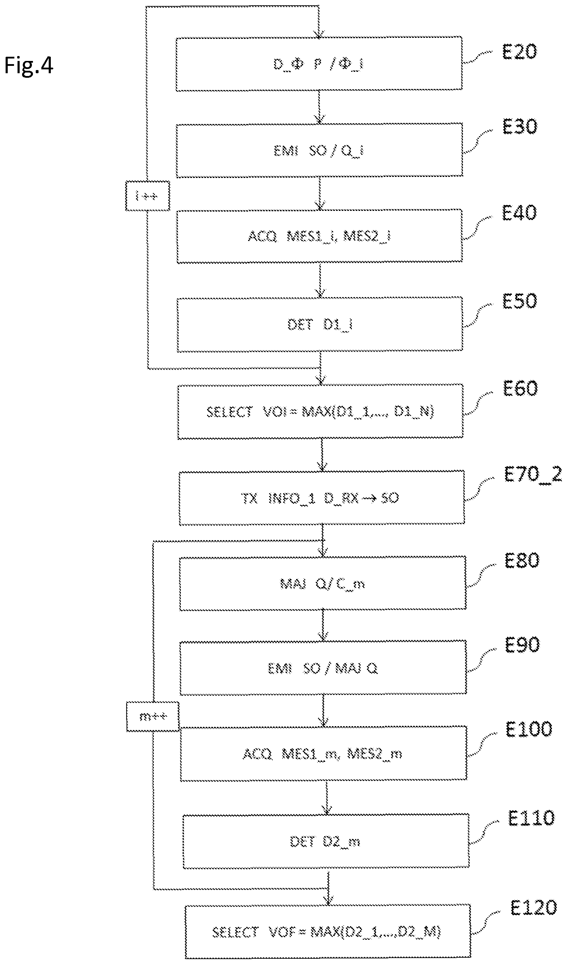

A cet effet, la figure 4 représente schématiquement un mode particulier de mise en oeuvre du procédé de sélection de la figure 2, dit « deuxième mode optimal ».

Ledit deuxième mode optimal correspond à un mode particulier de mise en oeuvre dans lequel l'écart de puissance E_P est maximisé en considérant à nouveau les valeurs $\Phi\_1$, ..., $\Phi\_N$ ainsi que les couples C_1, ..., C_M formés desdits premier et deuxième coefficients comme des variables d'optimisation. Toutefois, ledit deuxième mode optimal diffère du premier mode optimal en ce que l'ordre dans lequel lesdites variables d'optimisation sont considérées est modifié. Plus particulièrement, dans ledit deuxième mode optimal, et comme détaillé ci-après, on procède tout d'abord à une première optimisation suivant les valeurs $\Phi\_1$, ..., $\Phi\_N$. Puis, sur la base de cette première optimisation, on procède ensuite à une deuxième optimisation suivant les couples C_1, ..., C_M. Ainsi, à la différence dudit premier mode optimal, ledit deuxième mode optimal comporte deux boucles d'optimisation qui ne sont pas incluses l'une dans l'autre, mais sont mises en oeuvre en série.

Il importe de noter que les éléments explicités ci-avant pour ledit cadre théorique mathématique restent valables pour ledit deuxième mode optimal, à quelques modifications près. L'homme du métier sait mettre en oeuvre sans difficulté ces modifications. Plus particulièrement, il sait modéliser ledit deuxième mode optimal à partir d'objets mathématiques identiques ou similaires (matrice de déphasage, matrice de partage de puissance, matrice normalisée, produit de matrices, etc.).

Tel qu'illustré par la figure 4, le procédé de sélection fait suite aux étapes E20 à E60 telles que décrites ci-avant en référence à la figure 2. Il comporte, dans ledit deuxième mode optimal, après l'étape E60 de sélection de ladite valeur optimale intermédiaire VOI, une étape E70_2 de transmission, par le dispositif récepteur D_RX et vers la source SO, d'une information INFO_1 identifiant le précodeur, dit « précodeur optimal intermédiaire » Q, sur la base duquel a été déterminée ladite valeur optimale intermédiaire VOI. Ladite étape E70_2 de transmission (encore notée « TX INFO_1 D_RX -> SO » dans la figure 4) est mise en oeuvre par le dispositif récepteur D_RX, plus particulièrement par un module de transmission équipant ledit dispositif récepteur D_RX.

On comprend donc que ledit précodeur optimal intermédiaire Q correspond à un des précodeurs Q_1, ..., Q_N obtenus suite aux itérations des étapes E20 de déphasage.

Dans un exemple particulier de mise en oeuvre, lesdits précodeurs Q_1, ..., Q_N sont mémorisés par la source SO au fur et à mesure où ils sont obtenus, ainsi que regroupés au sein d'une liste. En outre, ladite information INFO_1 est représentative de la position (ou encore de l'indice), au sein de cette liste, du précodeur Q_i correspondant audit précodeur optimal intermédiaire Q.

Par exemple, et plus spécifiquement, un compteur d'indices est incrémenté par le dispositif récepteur D_RX à chaque itération des étapes de déphasage E20, d'émission E30, d'acquisition E40 et de détermination E50. Ladite information INFO_1 correspond alors à l'indice dudit compteur associé à l'itération au cours de laquelle a été déterminée ladite valeur optimale intermédiaire.

D'une manière générale, aucune limitation n'est attachée à la forme de l'information INFO_1 transmise à la source SO dès lors que celle-ci est en mesure de permettre l'identification dudit précodeur optimal intermédiaire Q. En outre, la transmission de ladite information INFO_1 est par exemple contenue dans un message, par exemple un message défini dans une norme de télécommunication.

Le procédé de sélection comporte en outre, pour un couple C_m de premier et deuxième coefficients strictement positifs, une pluralité d'étapes, à savoir dans un premier temps une étape E80 de mise à jour, par la source SO, du précodeur Q. Le précodeur Q mis à jour correspond au précodeur Q dont les première et deuxième composantes sont pondérées par respectivement lesdits premier et deuxième coefficients.

La mise en oeuvre de ladite étape 80 (encore notée « MAJ Q / C_m » dans la figure 4) est similaire à celle de l'étape E10_1 mentionnée auparavant dans le cadre du premier mode optimal, à ceci près que ladite étape 80 concerne ici le précodeur Q et non le précodeur P. Les caractéristiques techniques évoquées en référence à l'étape E10_1, et relatives à la mise en oeuvre matricielle d'une telle étape ainsi qu'aux valeurs possibles desdits premier et deuxième coefficients, s'appliquent encore ici.

Le procédé de sélection comporte également une étape E90 d'émission, par la source SO, au moyen dudit précodeur Q mis à jour. La mise en oeuvre de ladite étape E90 d'émission (encore notée « EMI SO / MAJ Q » dans la figure 4) est similaire à celle de l'étape E30 décrite auparavant.

Au cours de ladite étape E90 d'émission, le procédé de sélection comporte une étape E100 d'acquisition, par le dispositif récepteur D_RX, d'une première mesure MES1_m et d'une deuxième mesure MES2_m de puissance électromagnétique lorsque le dispositif transmetteur est respectivement dans un état de non-rétrodiffusion et dans un état de rétrodiffusion. La mise en oeuvre de ladite étape E100 d'acquisition (encore notée « ACQ MES1_m, MES2_m » dans la figure 4) est similaire à celle de l'étape E40 décrite auparavant.

Une fois lesdites première et deuxième mesures acquises, le procédé de sélection comporte une étape E110 de détermination, par le dispositif récepteur D_RX, d'une valeur D2_m représentative de l'écart de puissance E_P. La mise en oeuvre de ladite étape E110 de détermination (encore notée « DET D2_m » dans la figure 4) est similaire à celle de l'étape E50 décrite auparavant, à ceci près qu'il est ici déterminé une valeur D2_m et non une valeur D1_i.

Par ailleurs, dans ledit deuxième mode optimal, lesdites étapes de mise à jour E80, d'émission E90, d'acquisition E100 et de détermination E110 sont itérées pour ladite pluralité de couples C_1, ..., C_M distincts entre eux.

Le fait de considérer une pluralité de de couples C_1, ..., C_M permet d'obtenir, à l'issue desdites itérations, une pluralité de valeurs D2_1, ..., D2_M.

Une fois que les étapes de mise à jour E80, d'émission E90, d'acquisition E100 et de détermination E110 ont été itérées, le procédé de sélection comporte une étape 120 de sélection, par le dispositif récepteur D_RX, d'une valeur, dite « valeur optimale finale » VOF, maximale parmi les valeurs D2_1, ..., D2_M déterminées. La mise en oeuvre de ladite étape E120 de sélection (encore notée « SELECT VOF = MAX(D2_1,...,D2_M » dans la figure 4) est similaire à celle de l'étape E70_1 décrite auparavant.

Il est à noter que l'invention a été décrite jusqu'à présent en considérant une pluralité d'étapes de mises à jour d'un précodeur (étapes E10_1 pour le premier mode optimal et pour le précodeur P, ainsi que étapes 80 pour le deuxième mode optimal et le précodeur Q), et en considérant également que ces étapes de mises à jour faisaient partie d'une boucle d'optimisation. Toutefois, et en ce qui concerne plus particulièrement ledit premier mode optimal, l'invention reste applicable au cas où une unique étape de mise à jour du précodeur P est mise en oeuvre. Autrement dit, dans ce cas particulier, il est seulement procédé à une boucle d'optimisation par rapport aux valeurs de déphasage $\Phi_1$, ..., $\Phi_N$. Néanmoins, le fait d'avoir une mise à jour du précodeur P avant la mise en oeuvre d'une telle boucle d'optimisation maintient la possibilité de modifier la répartition de puissance électromagnétique transmise par la source SO vers chacun des dispositifs transmetteur D_TX et récepteur D_RX, par exemple sur la base d'informations externes concernant l'environnement de propagation du système 10 de communication. De telles informations externes sont par exemple relatives à une modification substantielle dudit environnement de propagation (un ou plusieurs objets déplacés, etc.), si bien que le précodeur de focalisation P est avantageusement mis à jour pour tenir compte de la modification du canal de propagation séparant la source SO des dispositifs D_TX, D_RX. En conséquence d'une telle mise à jour du précodeur P, les résultats obtenus à l'issu de la boucle d'optimisation portant sur les valeurs $\Phi_1$, ..., $\Phi_N$ sont plus pertinents.

Il est à noter que l'invention a été décrite jusqu'à présent en considérant que le dispositif transmetteur D_TX était associé à un seul état de rétrodiffusion ainsi qu'un seul état de non-rétrodiffusion. L'invention reste néanmoins applicable dans le cas où le dispositif transmetteur D_TX est associé à une pluralité d'états de rétrodiffusion, ces états étant distincts entre eux en ce qu'ils sont mis en oeuvre grâce à des impédances respectives distinctes entre elles. Dans ce cas, il faut comprendre qu'un seul état de rétrodiffusion est considéré parmi l'ensemble desdits états de rétrodiffusion lorsque des étapes d'acquisition du procédé de sélection sont exécutées. Autrement dit, quelle que soit l'étape d'acquisition à laquelle il est fait référence, l'état de rétrodiffusion considéré demeure identique.

Par ailleurs, et suivant un autre aspect, l'invention concerne également un procédé de communication par rétrodiffusion ambiante entre le dispositif transmetteur D_TX et le dispositif récepteur D_RX.

La figure 5 représente, sous forme d'ordinogramme, les principales étapes du procédé de communication selon l'invention. Ledit procédé de communication est mis en oeuvre par le système 10 de communication selon l'invention, et détaillé ci-après, à titre illustratif, en référence au système 10 décrit précédemment (figure 1).

Tel qu'illustré par la figure 5, le procédé de communication comporte dans un premier temps une étape H10 d'obtention d'une valeur optimale VO (encore notée « OBT VO » dans la figure 5).

Dans un mode particulier de mise en oeuvre, ladite valeur optimale VO correspond à une valeur optimale intermédiaire obtenue, par sélection, comme cela a été décrit précédemment dans le cadre du procédé de sélection. Ainsi, il peut s'agir d'une valeur optimale intermédiaire obtenue alors que :

- seule une boucle d'optimisation portant sur les valeurs $\Phi\_1$, ..., $\Phi\_N$ est considérée, ou bien
- une boucle d'optimisation sur les valeurs $\Phi\_1$, ..., $\Phi\_N$ et une boucle d'optimisation portant sur les couples de coefficients C_1, ..., C_M sont considérées. Plus particulièrement, lorsque plusieurs valeurs optimales intermédiaires sont obtenues (cas du premier mode optimal), la valeur optimale à laquelle il est fait référence pour ladite étape H10 correspond par exemple à l'une quelconque desdites valeurs optimales intermédiaires.

Dans un autre mode particulier de mise en oeuvre, ladite valeur optimale correspond à une valeur optimale finale obtenue, par sélection, comme cela a été décrit précédemment dans le cadre du procédé de sélection.

Une fois ladite valeur optimale obtenue, le procédé de communication comporte une étape H20 de transmission, par le dispositif récepteur D_RX et vers la source SO, d'une information INFO_2 identifiant le précodeur, dit « précodeur optimisé » PO, sur la base duquel a été déterminée ladite valeur optimale intermédiaire / valeur optimale finale. Ladite étape H20 de transmission (encore notée « TX INFO_2 D_RX -> SO » dans la figure 5) est mise en oeuvre grâce au module de transmission déjà mentionné auparavant et équipant ledit dispositif récepteur D_RX.

Les caractéristiques mentionnées ci-avant en référence à l'information INFO_1 (information représentative d'une position dans une liste, information correspondant à l'indice d'un compteur, indifférence quant à la forme de l'information, transmission via un message comme par exemple un message défini dans une norme de télécommunication) s'appliquent encore ici en ce qui concerne l'information INFO_2.

Une fois que ladite information INFO_2 a été transmise à la source SO, le procédé de communication comporte une étape H30 d'émission (encore notée « EMI SO / PO » dans la figure 5), par ladite source SO, d'un signal ambiant au moyen du précodeur optimisé PO identifié par ladite INFO_2.

Dès lors, le procédé de communication comporte une étape H40 de rétrodiffusion (encore notée « RETRO D_TX -> D_RX » dans la figure 5), par le dispositif transmetteur D_TX, du signal ambiant émis par la source SO (i.e. le dispositif transmetteur D_TX passe de l'état de non-rétrodiffusion à l'état de rétrodiffusion s'il n'était pas déjà dans cet état auparavant). En pratique, le dispositif transmetteur D_TX rétrodiffuse le signal que la source SO focalise vers celui-ci au moyen dudit précodeur optimisé PO.

Le procédé de communication comporte également une étape H50 de réception (encore notée « RECEP D_RX » dans la figure 5), par le dispositif récepteur D_RX, du signal ambiant rétrodiffusé par le dispositif transmetteur D_TX.

Dans un mode particulier de mise en oeuvre (non représenté sur la figure 5), lesdites étapes d'obtention H10, de transmission H20, d'émission H30, de rétrodiffusion H40 et de réception H50 sont itérées de manière récurrente.

Le fait de réaliser ces étapes de manière récurrente permet de prendre en compte la variabilité de l'environnement dans lequel sont positionnés le dispositif transmetteur D_TX et le dispositif récepteur D_RX.

Par exemple, lesdites étapes sont itérées de manière périodique, par exemple une fois par jour dans un environnement dans lequel la distribution de puissance générée par la source SO est stable, ou bien davantage, par exemple une fois toutes les heures si la distribution de puissance est susceptible d'évoluer substantiellement toutes les heures.

Enfin, en ce qui concerne les positions respectives du dispositif transmetteur D_TX et du dispositif récepteur D_RX dans l'environnement du système 10 de communication, plusieurs exemples de réalisation peuvent être envisagés.

Par exemple, lesdites positions sont arbitraires dans ledit environnement.

Selon un autre exemple de réalisation, lesdites positions sont avantageusement déterminées, lors du procédé de sélection, au cours d'une étape antérieure à tout déphasage ou mise à jour d'un précodeur. Plus particulièrement, dans cet exemple de réalisation, lesdites positions sont déterminées à l'aide d'un ou deux terminaux, comme par exemple des téléphones cellulaires intelligents, aptes à échanger des données (séquences pilotes) avec la source SO afin que cette dernière puisse estimer, par réciprocité, le ou les canaux de propagation la séparant desdits terminaux. Sur la base de la connaissance de ces canaux, ladite source SO détermine le précodeur de focalisation P, ledit précodeur P étant configuré pour générer, dans ledit environnement, des zones en lesquelles les dispositifs transmetteur D_TX et récepteur D_RX sont positionnés. Une telle mise en oeuvre est par exemple décrite dans la demande de brevet associée au numéro de dépôt FR1908917 et intitulée « Procédé de génération d'au moins une zone pour la rétrodiffusion d'un signal ambiant et /ou pour la réception d'un signal ambiant rétrodiffusé ».

## Revendications

1. Procédé de sélection mis en oeuvre par un système de communication par rétrodiffusion ambiante comportant une source émettrice ainsi qu'un dispositif transmetteur (D_TX) et un dispositif récepteur (D_RX), la source étant associée à un précodeur de focalisation P comportant une première et une deuxième composantes pour focaliser des signaux vers respectivement le dispositif transmetteur et le dispositif récepteur,

    ledit procédé comportant, pour une valeur $\Phi\_i$ comprise dans l'intervalle $[0, 2\pi]$ :

      - une étape (E20) de déphasage, par la source, d'une des composantes du précodeur P selon ladite valeur $\Phi\_i$, de sorte à obtenir un précodeur Q_i,
      - une étape (E30) d'émission, par la source, au moyen dudit précodeur Q_i,
      - une étape (E40) d'acquisition, par le dispositif récepteur, d'une première mesure (MES1_i) et d'une deuxième mesure (MES2_i) de puissance électromagnétique lorsque le dispositif transmetteur est respectivement dans un état de non-rétrodiffusion et dans un état de rétrodiffusion,
      - une étape (E50) de détermination, par le dispositif récepteur, d'une valeur D1_i représentative d'un écart de puissance, en valeur absolue, entre lesdites première et deuxième mesures,

    lesdites étapes de déphasage, d'émission, d'acquisition et de détermination étant itérées pour une pluralité de valeurs $\Phi\_1$, ..., $\Phi\_N$ distinctes entre elles, le procédé comportant en outre une étape (E60) de sélection, par le dispositif récepteur, d'une valeur, dite valeur optimale intermédiaire (VOI), maximale parmi les valeurs D1_1, ..., D1_N déterminées.

2. Procédé selon la revendication 1, dans lequel lesdites étapes de déphasage, d'émission, d'acquisition et de détermination sont itérées tant que la valeur D1_i déterminée au cours d'une étape de détermination pour une valeur $\Phi\_i$ est inférieure à un seuil prédéterminé.

3. Procédé selon la revendication 1, dans lequel lesdites étapes de déphasage, d'émission, d'acquisition et de détermination sont itérées un nombre déterminé de fois.

4. Procédé selon l'une quelconque des revendications 1 à 3, dans lequel les valeurs $\Phi\_1$, ..., $\Phi\_N$ sont échantillonnées suivant une échelle logarithmique ou bien suivant une échelle linéaire.

5. Procédé selon l'une quelconque des revendications 1 à 4, dans lequel le précodeur P est de type forçage à zéro, ZF, ou bien de type minimisation d'une erreur quadratique moyenne, MMSE.

6. Procédé selon l'une quelconque des revendications 1 à 5, ledit procédé comportant en outre, avant la mise en oeuvre des étapes de déphasage, d'émission, d'acquisition et de détermination, au moins une étape (E10_1) de mise à jour, par la source, du précodeur P, le précodeur P mis à jour correspondant au précodeur P dont les première et deuxième composantes sont pondérées par respectivement un premier coefficient et un deuxième coefficient strictement positifs formant un couple de coefficients (C_m), et l'étape de déphasage étant appliquée audit précodeur P mis à jour.

7. Procédé selon la revendication 6, dans lequel une pluralité d'étapes (E10_1) de mise à jour est considérée, les couples de premier et deuxième coefficients considérés au cours desdites étapes de mise à jour étant distincts entre eux, l'ensemble d'étapes formé :

      - des itérations des étapes de déphasage, d'émission, d'acquisition et de détermination pour les valeurs $\Phi\_1$, ..., $\Phi\_N$, et
      - de l'étape de sélection d'une valeur optimale intermédiaire,
      étant itéré pour chacune des étapes de mise à jour considérée, de sorte qu'à chaque étape de mise à jour correspond une valeur optimale intermédiaire (VOI_m),
ledit procédé comportant en outre une étape (E70_1) de sélection, par le dispositif récepteur, d'une valeur, dite valeur optimale finale (VOF), maximale parmi lesdites valeurs optimales intermédiaires (VOI_1,..., VOI_M).

**8.** Procédé selon l'une quelconque des revendications 6 à 7, dans lequel, pour une étape (E10_1) de mise à jour donnée, le premier coefficient est égal à une valeur $\delta$, où $\delta$ est choisi dans l'intervalle ]0,1[, et le deuxième coefficient est égal à $\sqrt{1-\delta^2}$ .

**9.** Procédé selon l'une quelconque des revendications 1 à 5, ledit procédé comportant, après l'étape (E60) de sélection de ladite valeur optimale intermédiaire, une étape (E70_2) de transmission, par le dispositif récepteur et vers la source, d'une information (INFO_1) identifiant le précodeur, dit précodeur optimal intermédiaire Q, sur la base duquel a été déterminée ladite valeur optimale intermédiaire (VOI),

ledit procédé comportant en outre, pour un couple (C_m) de premier et deuxième coefficients strictement positifs :

- une étape (E80) de mise à jour, par la source, du précodeur Q, le précodeur Q mis à jour correspondant au précodeur Q dont les première et deuxième composantes sont pondérées par respectivement lesdits premier et deuxième coefficients,
- une étape (E90) d'émission, par la source, au moyen dudit précodeur Q mis à jour,
- une étape (E100) d'acquisition, par le dispositif récepteur, d'une première mesure (MES1_m) et d'une deuxième mesure (MES2_m) de puissance électromagnétique lorsque le dispositif transmetteur est respectivement dans un état de non-rétrodiffusion et dans un état de rétrodiffusion,
- une étape (E110) de détermination, par le dispositif récepteur, d'une valeur D2_m représentative d'un écart de puissance, en valeur absolue, entre lesdites mesures,

lesdites étapes de mise à jour, d'émission, d'acquisition et de détermination considérées pour un couple de coefficients étant itérées pour une pluralité de couples (C_1, ..., C_M ) de coefficients distincts entre eux, le procédé comportant en outre une étape (E120) de sélection, par le dispositif récepteur, d'une valeur, dite valeur optimale finale (VOF), maximale parmi les valeurs D2_1, ..., D2_M déterminées.

**10.** Procédé de communication mis en oeuvre par un système de communication par rétrodiffusion ambiante comportant au moins une source émettrice ainsi qu'un dispositif transmetteur (D_TX) et un dispositif récepteur (D_RX), la source étant associée à un précodeur de focalisation P comportant une première et une deuxième composantes pour focaliser des signaux vers respectivement le dispositif transmetteur et le dispositif récepteur,
ledit procédé de communication comportant :

- une étape (H10) d'obtention d'une valeur optimale intermédiaire sélectionnée selon un procédé conforme à l'une quelconque des revendications 1 à 9, ou bien d'une valeur optimale finale sélectionnée selon un procédé conforme à l'une quelconque des revendications 7 à 9,
- une étape (H20) de transmission, par le dispositif récepteur et vers la source, d'une information (INFO_2) identifiant le précodeur, dit précodeur optimisé (PO), sur la base duquel a été déterminée ladite valeur optimale intermédiaire ou bien ladite valeur optimale finale,
- une étape (H30) d'émission, par la source, d'un signal ambiant au moyen dudit précodeur optimisé,
- une étape (H40) de rétrodiffusion, par le dispositif transmetteur, dudit signal ambiant,
- une étape (H50) de réception, par le dispositif récepteur, du signal ambiant rétrodiffusé.

**11.** Programme d'ordinateur comportant des instructions pour la mise en oeuvre d'au moins une partie d'un procédé de sélection selon l'une quelconque des revendications 1 à 9 ou d'au moins une partie d'un procédé de communication selon la revendication 10 lorsque ledit programme est exécuté par au moins un ordinateur.

**12.** Support d'enregistrement lisible par un ordinateur sur lequel est enregistré un programme d'ordinateur selon la revendication 11.

**13.** Système de communication par rétrodiffusion ambiante comportant une source émettrice ainsi qu'un dispositif transmetteur (D_TX) et un dispositif récepteur (D_RX), la source étant associée à un précodeur de focalisation P comportant une première et une deuxième composantes pour focaliser des signaux vers respectivement le dispositif transmetteur et le dispositif récepteur,

ladite source comportant :

- un module de déphasage, configuré pour déphaser, pour une valeur $\Phi\_i$ comprise dans l'intervalle [0, $2\pi$], une des composantes du précodeur P selon ladite valeur $\Phi\_i$, de sorte à obtenir un précodeur Q_i,
- des moyens d'émission au moyen dudit précodeur Q_i,

et ledit dispositif récepteur comportant :

- des moyens d'acquisition, configurés pour acquérir des mesures de puissance électromagnétique lorsque le dispositif transmetteur est respectivement dans un état de non-rétrodiffusion et dans un état de rétrodiffusion,
- un module de détermination, configuré pour déterminer, à partir de deux mesures acquises, une valeur représentative d'un écart de puissance entre lesdites deux mesures acquises,
- un module de sélection, configuré pour sélectionner, lorsque plusieurs valeurs ont été déterminées, une valeur maximale parmi lesdites valeurs déterminées.

**14.** Système selon la revendication 13, le dispositif récepteur comportant en outre un module de transmission, configuré pour transmettre vers la source une information identifiant un précodeur sur la base duquel a été déterminée ladite valeur maximale.


**Patentansprüche**

**1.** Auswahlverfahren, durchgeführt von einem Kommunikationssystem durch Umgebungsrückstreuung, das eine Sendequelle sowie eine Transmittervorrichtung (D_TX) und eine Empfangsvorrichtung (D_RX) enthält, wobei die Quelle einem Fokussierungsvorcodierer P zugeordnet ist, der eine erste und eine zweite Komponente aufweist, um Signale zur Transmittervorrichtung bzw. zur Empfangsvorrichtung zu fokussieren,
wobei das Verfahren für einen im Intervall [0, $2\pi$] enthaltenen Wert $\Phi\_i$ aufweist:

- einen Schritt (E20) der Phasenverschiebung einer der Komponenten des Vorcodierers P gemäß dem Wert $\Phi\_1$, durch die Quelle, um einen Vorcodierer Q_i zu erhalten,
- einen Schritt (E30) des Sendens mittels des Vorcodierers Q_i durch die Quelle,
- einen Schritt (E40) der Erfassung, durch die Empfangsvorrichtung, einer ersten Messung (MES1_i) und einer zweiten Messung (MES2_i) elektromagnetischer Leistung, wenn die Transmittervorrichtung in einem Zustand der Nicht-Rückstreuung bzw. in einem Zustand der Rückstreuung ist,
- einen Schritt (E50) der Bestimmung, durch die Empfangsvorrichtung, eines Werts D1_i, der für eine Leistungsabweichung, im Absolutwert, zwischen den ersten und zweiten Messungen repräsentativ ist, wobei die Schritte der Phasenverschiebung, des Sendens, der Erfassung und der Bestimmung für eine Vielzahl von voneinander unterschiedlichen Werten $\Phi\_1$, ... , $\Phi\_N$ wiederholt werden, wobei das Verfahren außerdem einen Schritt (E60) der Auswahl, durch die Empfangsvorrichtung, eines optimaler Zwischenwert (VOI) genannten maximalen Werts unter den bestimmten Werten D1_1, ... , D1_N aufweist.

**2.** Verfahren nach Anspruch 1, wobei die Schritte der Phasenverschiebung, des Sendens, der Erfassung und der Bestimmung wiederholt werden, so lange der während eines Bestimmungsschritts für einen Wert $\Phi\_i$ bestimmte Wert D1_i niedriger ist als eine vorbestimmte Schwelle.

**3.** Verfahren nach Anspruch 1, wobei die Schritte der Phasenverschiebung, des Sendens, der Erfassung und der Bestimmung eine bestimmte Anzahl von Malen wiederholt werden.

**4.** Verfahren nach einem der Ansprüche 1 bis 3, wobei die Werte $\Phi\_1$,..., $\Phi\_N$ gemäß einer logarithmischen Skala oder auch gemäß einer linearen Skala abgetastet werden.

**5.** Verfahren nach einem der Ansprüche 1 bis 4, wobei der Vorcodierer P vom Zero-Forcing-Typ, ZF, oder vom Typ Minimierung eines mittleren quadratischen Fehlers, MMSE, ist.

**6.** Verfahren nach einem der Ansprüche 1 bis 5, wobei das Verfahren außerdem vor der Durchführung der Schritte der Phasenverschiebung, des Sendens, der Erfassung und der Bestimmung mindestens einen Schritt (E10_1) der Aktualisierung des Vorcodierers P durch die Quelle aufweist, wobei der aktualisierte Vorcodierer P dem Vorcodierer P entspricht, dessen erste und zweite Komponenten von einem ersten bzw. einem zweiten strikt positiven Koeffizienten gewichtet werden, die ein Paar von Koeffizienten (C_m) bilden, und der Schritt der Phasenverschiebung an den aktualisierten Vorcodierer P angewendet wird.

**7.** Verfahren nach Anspruch 6, wobei eine Vielzahl von Aktualisierungsschritten (E10_1) berücksichtigt wird, wobei die während der Aktualisierungsschritte berücksichtigten Paare erster und zweiter Koeffizienten sich voneinander unterscheiden, wobei die Einheit von Schritten, die gebildet wird von:

- Iterationen der Schritte der Phasenverschiebung, des Sendens, der Erfassung und der Bestimmung für die Werte $\Phi\_1, ... , \Phi\_N$, und
- dem Auswahlschritt eines optimalen Zwischenwerts, für jeden der berücksichtigten Aktualisierungsschritte wiederholt wird, so dass jedem Aktualisierungsschritt ein optimaler Zwischenwert (VOI_m) entspricht,

wobei das Verfahren außerdem einen Schritt (E70_1) der Auswahl, durch die Empfangsvorrichtung, eines optimaler Endwert (VOF) genannten maximalen Werts unter den optimalen Zwischenwerten (VOI_l, ... , VOI_M) aufweist.

**8.** Verfahren nach einem der Ansprüche 6 bis 7, wobei für einen gegebenen Aktualisierungsschritt (E10_1) der erste Koeffizient gleich einem Wert $\delta$ ist, wobei $\delta$ im Intervall $]0,1[$ gewählt wird, und der zweite Koeffizient gleich

$$\sqrt{1 - \delta^2}$$ ist.

**9.** Verfahren nach einem der Ansprüche 1 bis 5, wobei das Verfahren nach dem Schritt (E60) der Auswahl des optimalen Zwischenwerts einen Schritt (E70_2) der Übertragung einer den optimaler Zwischenvorcodierer Q genannten Vorcodierer, auf dessen Basis der optimale Zwischenwert (VOI) bestimmt wurde, identifizierenden Information (INFO_1) von der Empfangsvorrichtung und an die Quelle aufweist,

wobei das Verfahren außerdem für ein Paar (C_m) strikt positiver erster und zweiter Koeffizienten aufweist:

- einen Schritt (E80) der Aktualisierung des Vorcodierers Q durch die Quelle, wobei der aktualisierte Vorcodierer Q dem Vorcodierer Q entspricht., dessen erste und zweite Komponenten durch die ersten bzw. zweiten Koeffizienten gewichtet werden,
- einen Schritt (E90) des Sendens mittels des aktualisierten Vorcodierers Q durch die Quelle,
- einen Schritt (E100) der Erfassung einer ersten Messung (MES1_m) und einer zweiten Messung (MES2_m) einer elektromagnetischen Leistung durch die Empfangsvorrichtung, wenn die Transmittervorrichtung in einem Nicht-Rückstreuungszustand bzw. in einem Rückstreuungszustand ist,
- einen Schritt (E110) der Bestimmung eines Werts D2_m durch die Empfangsvorrichtung, der für eine Leistungsabweichung, im Absolutwert, zwischen den Messungen repräsentativ ist,

wobei die für ein Paar von Koeffizienten berücksichtigten Schritte der Aktualisierung, des Sendens, der Erfassung und der Bestimmung für eine Vielzahl von Paaren (C_1, ... , C_M) voneinander unterschiedlicher Koeffizienten wiederholt werden, wobei das Verfahren außerdem einen Schritt (E120) der Auswahl eines optimaler Endwert (VOF) genannten maximalen Werts unter den bestimmten Werten D2_1, ... , D2_M durch die Empfangsvorrichtung aufweist.

**10.** Kommunikationsverfahren, durchgeführt von einem Kommunikationssystem durch Umgebungsrückstreuung, das mindestens eine Sendequelle sowie eine Transmittervorrichtung (D_TX) und eine Empfangsvorrichtung (D_RX) aufweist, wobei die Quelle einem Fokussierungsvorcodierer P zugeordnet ist, der eine erste und eine zweite Komponente aufweist, um Signale zur Transmittervorrichtung bzw. zur Empfangsvorrichtung zu fokussieren, wobei das Kommunikationsverfahren aufweist:

- einen Schritt (H10) des Erhalts eines gemäß einem Verfahren nach einem der Ansprüche 1 bis 9 ausgewählten optimalen Zwischenwerts oder auch eines gemäß einem Verfahren nach einem der Ansprüche 7 bis 9 ausgewählten optimalen Endwerts,
- einen Schritt (H20) der Übertragung einer Information (INFO_2) von der Empfangsvorrichtung und an die Quelle, die den optimierter Vorcodierer (PO) genannten Vorcodierer identifiziert, auf dessen Basis der optimale Zwischenwert oder der optimale Endwert bestimmt wurden,
- einen Schritt (H30) des Sendens eines Umgebungssignals mittels des optimierten Vorcodierers, durch die Quelle,
- einen Schritt (H40) der Rückstreuung des Umgebungssignals durch die Transmittervorrichtung,
- einen Schritt (H50) des Empfangs des rückgestreuten Umgebungssignals durch die Empfangsvorrichtung.

11. Computerprogramm, das Anweisungen zur Durchführung mindestens eines Teils eines Auswahlverfahrens nach einem der Ansprüche 1 bis 9 oder mindestens eines Teils eines Kommunikationsverfahrens nach Anspruch 10 aufweist, wenn das Programm von mindestens einem Computer ausgeführt wird.

12. Computerlesbarer Aufzeichnungsträger, auf dem ein Computerprogramm nach Anspruch 11 aufgezeichnet ist.

13. Kommunikationssystem durch Umgebungsrückstreuung, das eine Sendequelle sowie eine Transmittervorrichtung (D_TX) und eine Empfangsvorrichtung (D_RX) aufweist, wobei die Quelle einem Fokussierungsvorcodierer P zugeordnet ist, der eine erste und eine zweite Komponente aufweist, um Signale zur Transmittervorrichtung bzw. zur Empfangsvorrichtung zu fokussieren,
wobei die Quelle aufweist:

- ein Phasenverschiebungsmodul, das konfiguriert ist, um für einen im Intervall $[0, 2\pi]$ enthaltenen Wert $\Phi\_i$ eine der Komponenten des Vorcodierers P gemäß dem Wert $\Phi\_i$ in Phase zu verschieben, um einen Vorcodierer $Q\_i$ zu erhalten,
- Sendeeinrichtungen mittels des Vorcodierers $Q\_i$, und die Empfangsvorrichtung aufweist:

- Erfassungseinrichtungen, die konfiguriert sind, um Messungen elektromagnetischer Leistung zu erfassen, wenn die Transmittervorrichtung in einem Zustand der Nicht-Rückstreuung bzw. in einem Zustand der Rückstreuung ist,
- ein Bestimmungsmodul, das konfiguriert ist, um ausgehend von zwei erfassten Messungen einen für eine Leistungsabweichung zwischen den zwei erfassten Messungen repräsentativen Wert zu bestimmen,
- ein Auswahlmodul, das konfiguriert ist, um, wenn mehrere Werte bestimmt wurden, einen maximalen Wert unter den bestimmten Werten auszuwählen.

14. System nach Anspruch 13, wobei die Empfangsvorrichtung außerdem ein Übertragungsmodul aufweist, das konfiguriert ist, um eine Information an die Quelle zu übertragen, die einen Vorcodierer identifiziert, auf dessen Basis der maximale Wert bestimmt wurde.


**Claims**

1. Selection method implemented by an ambient backscatter communication system comprising an emitting source as well as a transmitter device (D_TX) and a receiver device (D_RX), the source being associated with a focusing precoder P comprising a first and a second component for focusing signals towards the transmitter device and the receiver device, respectively,

said method comprising, for a value $\Phi\_i$ in the interval $[0, 2\pi]$:

- a step (E20) of the source phase-shifting one of the components of the precoder P according to said value $\Phi\_1$, so as to obtain a precoder $Q\_i$,
- a step (E30) of the source emitting by means of said precoder $Q\_i$,
- a step (E40) of the receiver device acquiring a first measurement (MES1_i) and a second measurement (MES2_i) of electromagnetic power when the transmitter device is in a non-backscattering state and in a backscattering state, respectively,
- a step (E50) of the receiver device determining a value D1_i which is representative of a power difference, in terms of absolute value, between said first and second measurements,

said phase-shift, emission, acquisition and determination steps being iterated for a plurality of values $\Phi\_1, ...,$ $\Phi\_N$ which are distinct from one another, the method further comprising a step (E60) of the receiver device selecting a maximum value, referred to as the intermediate optimum value (VOI), from among the determined values D1_1, ..., D1_N.

**2.** Method according to Claim 1, wherein said phase-shift, emission, acquisition and determination steps are iterated as long as the value D1_i determined during a determination step for a value Φ_i is below a predetermined threshold.

**3.** Method according to Claim 1, wherein said phase-shift, emission, acquisition and determination steps are iterated a determined number of times.

**4.** Method according to any one of Claims 1 to 3, wherein the values Φ_1, ..., Φ_N are sampled on a logarithmic scale or indeed on a linear scale.

**5.** Method according to any one of Claims 1 to 4, wherein the precoder P is of zero-forcing, ZF, type or indeed of minimum mean square error, MMSE, type.

**6.** Method according to any one of Claims 1 to 5, said method further comprising, before the phase-shift, emission, acquisition and determination steps are implemented, at least one step (E10_1) of the source updating the precoder P, the updated precoder P corresponding to the precoder P the first and second components of which are weighted by a first coefficient and a second coefficient which are strictly positive and form a pair of coefficients (C_m), and the phase-shift step being applied to said updated precoder P.

**7.** Method according to Claim 6, wherein a plurality of update steps (E10_1) is considered, the pairs of first and second coefficients considered during said update steps being distinct from one another, the set of steps which is formed:

- of the iterations of the phase-shift, emission, acquisition and determination steps for the values Φ_1, ..., Φ_N, and
- of the step of selecting an intermediate optimum value,

being iterated for each of the update steps which is considered, so that each update step has a corresponding intermediate optimum value (VOI_m),
said method further comprising a step (E70_1) of the receiver device selecting a maximum value, referred to as the final optimum value (VOF), from among said intermediate optimum values (VOI_1, ..., VOI_M).

**8.** Method according to either one of Claims 6 and 7, wherein, for a given update step (E10_1), the first coefficient is equal to a value $\delta$, where $\delta$ is chosen in the interval ]0,1[, and the second coefficient is equal to $\sqrt{1-\delta^2}$ .

**9.** Method according to any one of Claims 1 to 5, said method comprising, after the step (E60) of selecting said intermediate optimum value, a step (E70_2) of the receiver device transmitting, to the source, information (INFO_1) identifying the precoder, referred to as the intermediate optimum precoder Q, on the basis of which said intermediate optimum value (VOI) was determined,

said method further comprising, for a pair (C_m) of strictly positive first and second coefficients:

- a step (E80) of the source updating the precoder Q, the updated precoder Q corresponding to the precoder Q the first and second components of which are weighted by said first and second coefficients, respectively,
- a step (E90) of the source emitting by means of said updated precoder Q,
- a step (E100) of the receiver device acquiring a first measurement (MES1_m) and a second measurement (MES2_m) of electromagnetic power when the transmitter device is in a non-backscattering state and in a backscattering state, respectively,
- a step (E110) of the receiver device determining a value D2_m which is representative of a power difference, in terms of absolute value, between said measurements,

said update, emission, acquisition and determination steps considered for a pair of coefficients being iterated for a plurality of pairs (C_1, ..., C_M) of coefficients which are distinct from one another, the method further comprising a step (E120) of the receiver device selecting a maximum value, referred to as the final optimum value (VOF), from among the determined values D2_1, ..., D2_M.

**10.** Communication method implemented by an ambient backscatter communication system comprising at least one emitting source as well as a transmitter device (D_TX) and a receiver device (D_RX), the source being associated with a focusing precoder P comprising a first and a second component for focusing signals towards the transmitter device and the receiver device, respectively,
said communication method comprising:

- a step (H10) of obtaining an intermediate optimum value selected according to a method in accordance with any one of Claims 1 to 9, or indeed a final optimum value selected according to a method in accordance with any one of Claims 7 to 9,
- a step (H20) of the receiver device transmitting, to the source, information (INFO_2) identifying the precoder, referred to as the optimized precoder (PO), on the basis of which said intermediate optimum value or indeed said final optimum value was determined,
- a step (H30) of the source emitting an ambient signal by means of said optimized precoder,
- a step (H40) of the transmitter device backscattering said ambient signal,
- a step (H50) of the receiver device receiving the backscattered ambient signal.

11. Computer program comprising instructions for implementing at least some of a selection method according to any one of Claims 1 to 9 or at least some of a communication method according to Claim 10 when said program is executed by at least one computer.

12. Storage medium which can be read by a computer on which a computer program according to Claim 11 is stored.

13. Ambient backscatter communication system comprising an emitting source as well as a transmitter device (D_TX) and a receiver device (D_RX), the source being associated with a focusing precoder P comprising a first and a second component for focusing signals towards the transmitter device and the receiver device, respectively,

said source comprising:

- a phase-shift module, configured to phase-shift, for a value $\Phi\_i$ in the interval $[0, 2\pi]$, one of the components of the precoder P according to said value $\Phi\_1$, so as to obtain a precoder $Q\_i$,
- means for emitting by means of said precoder $Q\_i$,

and said receiver device comprising:

- acquisition means, configured to acquire measurements of electromagnetic power when the transmitter device is in a non-backscattering state and in a backscattering state, respectively,
- a determination module, configured to determine, on the basis of two acquired measurements, a value which is representative of a power difference between said two acquired measurements,
- a selection module, configured to select, when several values have been determined, a maximum value from among said determined values.

14. System according to Claim 13, the receiver device further comprising a transmission module, configured to transmit, to the source, information identifying a precoder on the basis of which said maximum value was determined.

10

Fig.1

Fig.2

| | |
|---|---|
| D_Φ P / Φ_j | E20 |
| EMI SO / Q_j | E30 |
| ACQ MES1_j, MES2_j | E40 |
| DET D1_j | E50 |
| SELECT VOI = MAX(D1_1,..., D1_N) | E60 |

j++

| | |
|---|---|
| OBT VO | H10 |
| TX INFO_2 D_RX → SO | H20 |
| EMI SO / PO | H30 |
| RETRO D_TX → D_RX | H40 |
| RECEP D_RX | H50 |

Fig.5

Fig.3

| | |
|---|---|
| MAJ P / C_m | E10_1 |
| D_Φ MAJ P / Φ_i | E20 |
| EMI SO / Q_i | E30 |
| ACQ MES1_i, MES2_i | E40 |
| DET D1_i | E50 |
| SELECT VOI_m = MAX(D1_1,..., D1_N) | E60 |
| SELECT VOF = MAX(VOI_1,...,VOI_M) | E70_1 |

m ++

i ++

Fig.4

E20 — D_Φ P / Φ_i

E30 — EMI SO / Q_i

i++

E40 — ACQ MES1_i, MES2_i

E50 — DET D1_i

E60 — SELECT VOI = MAX(D1_1,..., D1_N)

E70_2 — TX INFO_1 D_RX → SO

E80 — MAJ Q/C_m

E90 — EMI SO / MAJ Q

m++

E100 — ACQ MES1_m, MES2_m

E110 — DET D2_m

E120 — SELECT VOF = MAX(D2_1,...,D2_M)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3349302 A1

- FR 1908917

**Littérature non-brevet citée dans la description**

- **N. VAN HUYNH et al.** Ambient Backscatter Communications: A Contemporary Survey. *IEEE Communications Surveys & Tutorials,* 2018, vol. 20 (4), 2889-2922

- **K. RACHEDI ; D. T. PHAN-HUY ; N. SELMENE ; A. OURIR ; M. GAUTIER ; A. GATI ; A. GALINDO-SERRANO ; R. FARA ; J. DE ROSNY.** Demo Abstract : Real-Time Ambient Backscatter Démonstration. *IEEE INFOCOM 2019 Posters and Demos,* 01 Mai 2019